# EUROPÄISCHE PATENTSCHRIFT

(11) **EP 2 997 637 B1**
(45) Veröffentlichungstag und Bekanntmachung des Hinweises auf die Patenterteilung: **26.12.2018**
(21) Anmeldenummer: 14724460.2
(22) Anmeldetag: 16.05.2014
(51) Int. Cl.: H02J 7/00, H02J 7/10, H02J 7/34

(54) **VERFAHREN UND VORRICHTUNG ZUM LADEN VON WIEDERAUFLADBAREN ZELLEN**
METHOD AND APPARATUS FOR CHARGING RECHARGEABLE CELLS
PROCÉDÉ ET DISPOSITIF DE CHARGE D'ÉLÉMENTS ACCUMULATEURS RECHARGEABLES

(30) Priorität: 17.05.2013 DE 102013105119
(43) Veröffentlichungstag der Anmeldung: 23.03.2016
(73) Patentinhaber: H-Tech AG, 9494 Schaan (LI)
(72) Erfinder: HEMPEL, Jörg, 72574 Bad Urach/Wittlingen (DE); TSCHIGGFREI, Peter, 6807 Tisis (AT)
(74) Vertreter: Ter Meer Steinmeister & Partner
(86) Internationale Anmeldenummer: PCT/EP2014/060062
(87) Internationale Veröffentlichungsnummer: WO 2014/184338

(56) Entgegenhaltungen:
- WO-A1-00/76049
- WO-A1-00/76049
- WO-A1-01/06613
- WO-A1-02/35679
- US-A- 4 736 150
- US-A- 5 481 174
- US-A- 5 998 968
- US-A- 6 097 172

## Beschreibung

Die Erfindung bezieht sich auf ein Verfahren zum adaptiven Laden von wiederaufladbaren Zellen, insbesondere von Lithium-Ionen Zellen oder auf Lithium basierten Zellen. Darüber hinaus bezieht sich die vorliegende Erfindung auf eine Vorrichtung zum Laden derartiger Zellen.

Die Neuausrichtung bei der Gewinnung von elektrischer Energie basierend auf regenerativen Energieträgern, insbesondere mittels Photovoltaik bzw. durch Windkraft, erfordert zunehmend eine effiziente Speicherung der erzeugten Energie, um die gespeicherte elektrische Energie dann bereitstellen zu können, wenn sie benötigt wird. Darüber hinaus ist eine deutliche Zunahme bei tragbaren bzw. Akku-betriebenen Geräten zu verzeichnen, die mit wiederaufladbaren Batterien bzw. Zellen betrieben werden, insbesondere zur Kommunikation und im Baugewerbe. Bei diesen Geräten stellt die Kapazität der wiederaufladbaren Batterie ein entscheidendes Funktionsmerkmal dar. Die Faktoren, die die Kapazität der wiederaufladbaren Batterie beeinflussen, sind einerseits die geometrische Größe, da eine Erhöhung der Kapazität herkömmlich mit einer Vergrößerung der geometrischen Abmessungen der Zelle bzw. der Batterie erreicht wird. Andererseits spielt die Haltbarkeit bzw. die Anzahl der maximal möglichen Aufladezyklen eine entscheidende Rolle, da bei üblichen Akku-betriebenen Geräten meist die Batterie oder Zelle als erstes ausfällt, d.h. bei der Haltbarkeit der Komponenten derartiger Geräte gehören die wiederaufladbaren Batterien bzw. Zellen zu den kurzlebigsten Komponenten.

Darüber hinaus sind Eigenschaften, wie Kapazität, Haltbarkeit und Ladezeit von wiederaufladbaren Zellen bzw. Batterien oder Speichermodulen, in dem sich sehr schnell entwickelnden Feld der E-mobility mit Hybrid- oder Elektrofahrzeugen besonders entscheidend für die Akzeptanz dieser neuer Technologie. Auch hier spielen die geometrischen Abmessungen und das Gewicht von wiederaufladbaren Zellen eine sehr wichtige Rolle.

Unter den wiederaufladbaren Zellen hat sich in letzter Zeit die Lithium-Ionen-Zelle als besonders vorteilhaft herausgestellt, da sie eine lange Lebenszeit aufweist und die Anzahl der Ladezyklen verglichen mit anderen Technologien hoch ist. Lithium-Ionen-Zellen weisen zudem eine hohe Speicherkapazität im Vergleich zu anderen wiederaufladbaren Zellen auf.

Bei Lithium-Ionen-Zellen wird die Zelle je nach Ausgestaltung maximal bis zu 30% ihrer Kapazität entladen. D.h., 30% der eigentlichen in der Zelle gespeicherten Energie stehen dem Endnutzer nicht zur Verfügung, da ein Entladen unter eine Schwelle von 30% zu einer unwiderruflichen Zerstörung der Lithium-Ionen-Zelle führen würde. Bei einer Entladung unter diese Schwelle können Ionen aus dem Elektrodenmaterial (Cu, Al) gelöst werden, wodurch diese Elektrode zerstört wird.

Darüber hinaus wird bei heutigen Lithium-Ionen-Zellen die Zelle auch nur bis 80% ihrer Kapazität geladen, da ein weiteres Aufladen auf 100% der Zelle exponentiell mehr Zeit erfordern würde, da bei Erreichen der Ladeschlussspannung üblicherweise der Strom begrenzt wird, wodurch die letzen 20% der Kapazität mit geringeren Stromstärken geladen werden, so dass pro Zeit weniger Energie in die Zelle eingespeichert oder geladen wird.

Dies unterstreicht umso mehr die nutzbare Kapazität einer Zelle möglichst schnell, aber auch schonend zu laden, um einerseits eine möglichst hohe Anzahl von Ladezyklen zu erreichen und andererseits die für das Aufladen erforderliche Zeit möglichst kurz zu halten, da die dafür vorhandenen Zeiten stark vom Nutzerverhalten abhängen.

Ein bekanntes Verfahren zum Verkürzen der Ladezeit von Lithium-Ionen Zellen ist das Pulsladen. Dazu beschreibt bspw. die US 5,481,174 ein Verfahren zum Laden von Lithium-Ionen Zellen, bei dem ein positiver und ein negativer Puls verwendet werden, wobei nach Erreichen einer voreingestellten maximalen Spannung die Höhe der positiven Strompulse reduziert wird, wodurch sich ein langer Ladeprozess ergibt.

Ausgehend von dieser Situation ergibt sich die Aufgabe der Erfindung, ein Verfahren zum Laden einer auf Lithium basierten Zelle, bzw. eine Vorrichtung zum Laden einer auf Lithium basierten Zelle anzugeben, bei denen die Kapazität der Zelle optimal genutzt wird und/oder die Ladezeit drastisch verkürzt wird und/oder die Haltbarkeit der Zelle verlängert wird und/oder eine Degenerierung einer geladenen Zelle nahezu verhindert wird.

US 6 097 172 A offenbart eine Vorrichtung und ein Verfahren zum Laden einer Batterie, mit Ladungspulsen gefolgt von Entladungspulsen und dann erste Ruhezeiten und andere Entladungspulse gefolgt von zweiten Ruhezeiten. Ausgewählte der zweiten Ruhezeiten sind in der Zeit ausgedehnt, um es zu ermöglichen, dass sich ein Batteriegleichgewicht ausbildet, und dass die Leerlaufspannung der Batterie sich einpendelt und einen Überladungszustand der Batterie reflektiert. Durch Vergleichen von Leerlaufspannungen, die während verschiedener ausgedehnter zweiter Ruhezeiten gemessen sind, können kleine Spannungsabfälle zuverlässig erkannt und verwendet werden, um einen Überladungszustand zu bestimmen. Sobald ein Überladen der Batterieladung festgestellt ist, wird das Laden der Batterie gestoppt.

WO 00/76049 A1 beschreibt ein Pulsladeverfahren für auf Lithium basierenden Batterien
WO 01/06613 A1 beschreibt ein Schnellladeverfahren für Bleiakkumulatoren.

Die Erfindung basiert auf dem Gedanken eine wiederaufladbare Zelle bzw. Batterie schneller zu laden als herkömmlich. Dazu wird ein Pulsladeverfahren angegeben, bei dem auf effiziente Art und Weise die Zelle einerseits sehr schonend geladen wird und andererseits die Ladezeit möglichst effektiv eingesetzt wird.

Es kann auch weiter eine Anladephase vorgesehen sein, in der die wiederaufladbare Zelle auf die Pulsladephase vorbereitet oder aktiviert wird. Für das Erreichen der oben genannten Ziele ist es jedoch ausreichend, nur die Pulsladephase durchzuführen.

Im Folgenden wird zunächst auf die erfindungsgemäße Pulsladephase eingegangen. Während der Pulsladephase wird ein pulsförmiges Ladeverfahren angewendet, bei dem die Zelle mit einem Ladestrom II geladen wird, der den maximal zugelassenen Ladestrom iLmax der Zelle übersteigt, bspw. um bis zu einem 5-Fachen des Wertes, den der Hersteller in seinem Datenblatt angegeben hat. Das pulsförmige Ladeverfahren setzt sich aus positiven Pulsen und negativen Pulsen zusammen. Die negativen Pulse stellen eine Belastung der Zelle mit einer definierten Last dar, d.h. die Zelle gibt Energie ab oder es fließt ein Strom mit umgekehrter Richtung. Während die positiven Pulse als Ladepulse bezeichnet werden, können die negativen Pulse dabei als Lastpulse, Belastungspulse oder Entladepulse bezeichnet werden. Auch der Begriff Reversepuls ist teilweise üblich. Während der Ladepulse wird ein Spannungspuls mit einem entsprechenden Strompuls angelegt. Nach dem Ladepuls wird die Spannung abgeschaltet und die Zelle wird für den Lastpuls mit einer Senke bzw. einer Last verbunden, d.h. es fließt ein Strom in umgekehrter Richtung. Die Spannung an der Zelle fällt während der Zeit des Lastpulses je nach Ladezustand der Zelle ab.

Durch das Anlegen eines Ladestromes, der höher als der maximal zugelassene Ladestrom ist, wird die Energie schneller in die Zelle eingespeichert als bei Anwendung des maximal zugelassenen Ladestroms. Dadurch werden beim Laden mehr Ionen von einer Elektrode zur anderen befördert, die dann bei einer Last wieder zurückwandern. Würde die Einspeicherung von Energie mit einem Ladestrom, der höher als der zugelassene Ladestrom ist, kontinuierlich über einen längeren Zeitraum
durchgeführt werden, würde sich die Zelle erwärmen und die in der Zelle eingebauten Sicherheitsmechanismen (PTC, Schmelzsicherung, Entgasungsventil, Balancer) würden einen derartigen Ladevorgang unterbrechen. Durch ein kontinuierliches Laden werden an den Elektroden der Zelle anhaltend Dendriten aufgebaut, die einerseits den Innenwiderstand der Zelle erhöhen, wodurch die Spannung an der Zelle ansteigt. Andererseits wird durch die steigende Anzahl von Dendriten auch die Anzahl der möglichen Ladezyklen reduziert.

Erfindungsgemäß wird nun aber vorgeschlagen, einem Ladepuls einen Lastpuls folgen zu lassen. Während dieses Lastpulses fließt der Strom in der Zelle in die andere Richtung, da die Zelle wieder Energie abgibt. Somit wird die während des Ladepulses aufgebaute Remanenz während des folgenden Lastpulses abgebaut. Durch den Lastpuls werden Dendriten bzw. Kristalle, die sich während des Ladepulses aufbauen, wieder abgebaut. Die Kristalle oder Dendriten können dazu führen, dass der Separator in der Zelle zwischen Kathode und Anode durchstochen wird, was schlimmstenfalls zu einem Kurzschluss führen würde. Durch den Lastpuls werden die aufgebauten Kristalle immer wieder abgebaut. Deshalb kann die Zelle im nächsten Ladepuls mit einem höheren Ladestrom als dem zugelassenen Ladestrom geladen werden, ohne dass sie sich überhitzt. Durch den höheren Ladestrom während des positiven Pulses wird mehr Energie in die Zelle eingespeichert, als bei herkömmlichen Ladeverfahren. Durch den folgenden Lastpuls wird der anhaltenden Bildung von Dendriten entgegengewirkt, sodass die Zelle weiter mit einem höheren Ladestrom geladen werden kann. Dabei ist die Höhe des Lastpulses geringer als beim Ladepuls bzw. ist die absolute Stromstärke während des Lastpulses kleiner. Es erfolgt somit eine Art Freispülen der Kanäle im Separator zum Ionenaustausch, wobei jedoch durch den höheren Ladestrom immer mehr Energie in der Zelle verbleibt.

Durch die erfindungsgemäßen kurzen hohen Ladeströme und darauf folgende Lastpulse erfolgt somit eine Formatierung des Separators. Über die Höhe der Lastpulse lässt sich einstellen, wie stark der Separator wieder freigespült wird. Je kleiner die Lastpulse sind, d.h. ein geringer Laststrom, desto geringer ist der Freispüleffekt. Die Dauer der Lastpulse hat insbesondere auf die Menge der Entladung einen Einfluss. D.h. auch wenn mit einem sehr hohem Laststrom aber einer sehr kurzen Lastpulsdauer gearbeitet wird, tritt der Freispüleffekt ein, wobei durch den kurzen Lastpuls die Menge der abgegebenen Energie gering ist.

Der Freispüleffekt verhindert einerseits eine ungleiche Verteilung oder Ablagerung des Lithiums bzw. der Ionen an einer der Elektroden. Darüber hinaus wird durch die kurzen Ladepulse und Lastpulse verhindert, dass die Temperatur der Zelle kritische Bereiche erreicht. Da die Pulse in beide Stromrichtungen kurz sind, kann sich die Temperatur an den Elektroden nicht wesentlich erhöhen. Zudem kann sich eine eventuelle Erhöhung der Temperatur an den Elektroden in der Zeit zwischen den Pulsen wieder abbauen. Eine kritische Erhöhung der Temperatur würde eine ungleiche Widerstandsverteilung in den Elektroden nach sich ziehen, wodurch letztlich das Lithium ungleich an den Elektroden abgelagert würde.

Bei einer Zelle sind die Anschlussfahnen üblicherweise diagonal zueinander angeordnet. D.h., die Leitungswiderstände in den Elektroden sind verschieden, insbesondere in einer gewickelten Zelle. Bei langen und kleinen Ladeströmen, u.a auch bei langsam gepulsten Ladeströmen, würden die Lithium-Ionen versuchen in Richtung des geringsten Widerstands zu wandern. D.h sie würden versuchen, nicht den kürzesten Weg zur gegenüberliegenden Elektrode zu nehmen, sondern innerhalb der Zelle direkt zur gegenpoligen Anschlussfahne zu wandern. Dies würde aber dazu führen, dass sich das Lithium an den Elektroden ungleich ablagern würde. Eine ungleiche Ablagerung des Lithiums an den Elektroden führt aber zu einer Reduzierung der Lebenszeit und zu einer Reduzierung der Kapazität der Zelle, da nicht mehr die gesamte Elektrodenfläche für die chemische Reaktion zur Verfügung steht.

Durch die kurzen Ladepulse mit erhöhtem Ladestrom und auch durch die Lastpulse haben die Ionen jedoch keine Zeit sich den Weg des geringsten Widerstands zu suchen und müssen den kürzesten Weg zwischen den Elektroden wählen, wodurch die gesamte Elektrodenlänge für den Ionenaustausch zur Verfügung steht und eine Ablagerung des Lithiums zwischen den Elektroden gleich verteilt bleibt.

Vorzugsweise beträgt der Ladestrom während der Ladepulse mehr als das 1,5-fache des Nennladestroms der Zelle, bspw. das 2 bis 3-fache des maximal zugelassenen Ladestroms oder größer. Ladeströme, die den maximal zugelassenen Ladestrom um das 5-fache übersteigen sind möglich. Der während der Pulsladephase zugeführte Ladestrom I_{L} bzw. entnommene Entladestrom I_{Last} (auch als Laststrom bezeichnet) wird nur durch einen PTC in beide Stromflussrichtungen begrenzt, dessen Leitfähigkeit von der Temperatur abhängig ist. Je nach Ausgestaltung der Zelle ist der PTC so ausgelegt, dass er dem 5 oder 10-fachen des maximal zugelassenen Ladestroms I_{Lmax} entspricht. Der PTC würde den Stromfluss unterbrechen, wenn ein stärkerer Strom fließen würde.

Nach einer gewissen Ladezeit und einer entsprechenden Anzahl von Ladepulsen überstiegt oder erreicht die Spannung Uz an der Zelle während der Ladepulse die Ladeschlussspannung U_{Lmax}. Bei herkömmlichen Ladeverfahren würde jetzt der Strom begrenzt werden, wie es beispielsweise bei der US 5,481,174 vorgenommen wird. Auch beim dem erfindungsgemäßen Ladeverfahren wird nach Erreichen der Ladeschlussspannung U_{Lmax} während eines Ladepulses, die Stromhöhe für den Ladepuls reduziert. Die Reduktion erfolgt dabei von dem Ladeprogramm, welches durch ein Ladegerät abgearbeitet wird. Um ein weiteres Ansteigen der Spannung an der Zelle Uz während des Ladepulses zu unterbinden, wird der Strom bereits während des aktuellen Ladepulses, in dem die Ladeschlussspannung U_{Lmax} erreicht wurde, reduziert.

Gemäß einem Aspekt der Erfindung umfasst das Pulsladeverfahren die Schritte: pulsförmiges Laden der Zelle, wobei der Ladestrom I_{L} während der Ladepulse den zugelassenen maximalen Ladestrom I_{Lmax} der Zelle um bis zum 5-fachen Wert übersteigt; und die Zelle zwischen den Ladepulsen mittels Lastpulsen entladen wird, wobei die Lastpulse kürzer als die Ladepulse sind. Dabei ist erfindungsgemäß eine maximale Anzahl m_{Max} von anwendbaren Lade- und/oder Lastpulsen vorbestimmt und das Ladeverfahren wird bei Erreichen dieser vorbestimmten Anzahl m_{Max} beendet. Dadurch wird neben den oben genannten Vorteilen erreicht, dass die Ladezeit nicht unnötig verlängert wird, da bei ständiger Reduktion des Ladestroms bzw. kleiner werdenden Strömen während der Ladepulse, die Menge an Energie, die in die Zelle eingespeichert wird, im Verhältnis zur erforderlichen Zeit gering bleibt.

Gemäß einem anderen Aspekt der Erfindung umfasst das Verfahren zum Laden wenigstens einer auf Lithium-Ionen basierten wiederaufladbaren Zelle, die Schritte: Überprüfen, ob wenigstens eine vorbestimmte Bedingung für ein Pulsladeverfahren erfüllt ist, wobei dann, wenn wenigstens eine der vorbestimmten Bedingungen für das pulsförmige Laden der Zelle erfüllt sind, ein Pulsladeverfahren begonnen wird, wobei der Ladestrom I_{L} während der Ladepulse den zugelassenen maximalen Ladestrom I_{Lmax} der Zelle um bis zum 5-fachen Wert übersteigt; und die Zelle zwischen den Ladepulsen mittels Lastpulsen entladen wird, wobei die Lastpulse kürzer als die Ladepulse sind. Vorzugsweise gehört zu den vorbestimmten Bedingungen wenigstens eines der folgenden Kriterien: Anliegen einer Spannung Uz an der Zelle während eines Lastpulses, die wenigstens einer Entladeschlussspannung U_{EL} der Zelle entspricht; oder ein externes Signal, welches eine Dringlichkeit für die Durchführung des Pulsladeverfahrens anzeigt.

Basierend auf einer dieser Bedingungen kann sichergestellt werden, dass das Pulsladeverfahren einerseits nur bei gewissen Voraussetzungen gestartet wird. Da das Pulsladeverfahren ein Schnellladeverfahren darstellt, muss die Zelle wenigstens vorbestimmte Grundkriterien erfüllen, bspw. keine Tiefentladung oder andere kritische Zustände aufweisen. Andererseits müssen von der Anwendung bzw. vom steuernden Gerät Bedingungen erfüllt sein, die ein Pulsladen erfordern, bspw. schnelles Laden eines Elektroautos an der Tankstelle, d.h. es sollte ein externes Signal vorliegen, welches eine schnelle Ladung erfordert.

Erfindungsgemäß umfasst ein Verfahren zum Laden wenigstens einer auf Lithium-Ionen basierten wiederaufladbaren Zelle die Schritte pulsförmiges Laden der Zelle, wobei der Ladestrom I_{L} während der Ladepulse den zugelassenen maximalen Ladestrom I_{Lmax} der Zelle um bis zum 5-fachen Wert übersteigt; und die Zelle zwischen den Ladepulsen mittels Lastpulsen entladen wird, wobei die Lastpulse kürzer als die Ladepulse sind, wobei nach Erreichen der Ladeschlussspannung U_{Lmax} die Dauer der Ladepulse reduziert wird.

Dies hat den Vorteil, dass eine Reduktion des Ladestroms während eines Ladepulses möglichst vermieden wird, wenigstens für die folgenden Ladepulse. Der überhöhte Ladestrom I_{L} wird dabei während der verkürzten Ladepulse beibehalten, da sonst das Ladeverfahren verlängert werden würde, da die Dauer der Ladepulse mit einem absinkendem Ladestrom nicht optimal genutzt werden würde. Somit wird sichergestellt, dass der überhöhte Ladestrom trotzdem verwendet werden kann, da dann die Dauer des Ladepulses, in der der überhöhte Ladestrom angewendet wird, reduziert ist. Dadurch ergibt sich insbesondere eine weitere Verkürzung des Ladeverfahrens, da möglichst lange mit dem überhöhten Ladestrom gepulst wird und dieser erst dann reduziert wird, wenn durch die Ladepulsverkürzung eine Spannungssteigerung an der Zelle nicht mehr verhindert werden kann. D.h. die wenigstens eine Zelle wird schneller an einen Ladeendzustand herangeführt.

Gemäß einem Aspekt der Erfindung umfasst das Verfahren zum Laden wenigstens einer auf Lithium-Ionen basierten wiederaufladbaren Zelle die Schritte: pulsförmiges Laden der Zelle, wobei der Ladestrom I_{L} während der Ladepulse den zugelassenen maximalen Ladestrom I_{Lmax} der Zelle um bis zum 5-fachen Wert übersteigt; und die Zelle zwischen den Ladepulsen mittels Lastpulsen entladen wird, wobei die Lastpulse kürzer als die Ladepulse sind, wobei vor und/oder nach einem Lastpuls für eine vorbestimmte Ruhezeit die Spannungszufuhr abgeschaltet wird bzw. kein Ladestrom zugeführt wird, wobei die Ruhezeit von der Anzahl und/oder der Kapazität zu ladenden Zellen abhängt.

Die Ruhezeit gibt der Zelle Zeit sich auf den Entladestrom während des Lastpulses bzw. auf den Ladestrom während des Ladepulses einzustellen. Nach Abschalten der Spannung für den Ladepuls bzw. Abschalten der Last nach dem Lastpuls, kehrt sich jeweils die Stromrichtung in der Zelle um. Um die Zelle dabei nicht zu stressen, wird eine Ruhepause vor und nach dem Lastpuls angewendet.

Vorzugsweise steigt die vorbestimmte Ruhezeit bei steigender Anzahl von zu ladenden Zellen, die an ein Anschlusselement gekoppelt sind. Bei steigender Anzahl von Zellen, die an ein Anschlusselement gekoppelt sind, d.h. parallel geschaltet sind, steigt der Strom, der über dieses Anschlusselement fließt. Durch die Richtungsumkehr des Stroms wird bei steigendem Strom eine längere Ruhepause zwischen den Pulsen benötigt. Ohne Ruhepausen zwischen Ladepulsen und Lastpulsen würde ansonsten der Entladestrom während der Lastpulse nicht voll wirksam und die Spannungen an der Zelle bzw. im Speichermodul mit mehreren Zellen können sich nicht ausbalancieren. Die Spannung würde somit in die Gegenrichtung gezwungen werden. Durch das Zwischenschalten von Ruhepausen zwischen den Lade- und Lastpulsen werden diese nachteiligen Aspekte verhindert.

Vorzugsweise ist die Anzahl von Zellen an einem Anschlusselement auf maximal 5 begrenzt.

Das Pulsladen wird erfindungsgemäß beendet, wenn eine vorbestimmte maximale Anzahl m_{Max} von anwendbaren Lade- und/oder Lastpulsen erreicht wird.

Die Verkürzung der Dauer der Ladepulse nach Erreichen der Ladeschlussspannung U_{Lmax} lässt sich mit allen anderen Ausführungsbeispielen kombinieren, d.h. mit der Begrenzung der maximalen Anzahl m_{Max} und/oder der Überprüfung, ob die Voraussetzungen fürs Pulsladen erfüllt sind.

Die Anwendung von Ruhezeiten vor und/oder nach einem Lastpuls, in denen Ruhezeit jeweils kein Ladestrom zugeführt wird, wobei die Dauer der Ruhezeit von der Anzahl und/oder der Kapazität zu ladenden Zellen abhängt, lässt sich ebenfalls mit allen anderen Ausführungsbespielen kombinieren.

Vorzugsweise wird in Abhängigkeit der Spannungsmessung während des Ladepulses die Höhe des Ladestroms I_{L} für den aktuellen Ladepuls eingestellt, wobei wenn die Spannung U_{Z} der Zelle während des Ladepulses die Ladeschlussspannung U_{Lmax} erreicht, die Dauer des Ladepulses für den nächsten Ladepuls reduziert wird. In einem bevorzugten Verfahren wird bei Erreichen der Ladeschlussspannung U_{Lmax} während des Ladepulses der Ladestrom I_{L} während des aktuellen Ladepulses reduziert.

In einer beispielhaften Ausgestaltung ist das Verhältnis zwischen einem Entladestrom I_{Last} während des Lastpulses und einem Ladestrom I_{L} während des Ladepulses 1:16. Es kann jedoch auch ein wesentlich höherer Entladestrom I_{Last} von 50% des Ladestroms I_{L}, in Ausnahmefällen bei sehr kurzen Lastpulsen sogar von bis zu 100% des Ladestroms I_{L} angewendet werden. Durch die kurzen Lastpulse wird erreicht, dass während des Lastpulses nicht mehr Energie aus der Zelle entnommen wird, als während des Ladepulses eingespeichert wird. Es hat sich weiter gezeigt, dass sich der Freispüleffekt am Separator insbesondere bei sehr hohen Entladeströmen I_{Last} verbessert. D.h. die Höhe und/oder Dauer des Entladestroms bzw. des Lastpulses kann in aufeinanderfolgenden Lastpulsen verschieden sein.

Erfindungsgemäß wird die Spannung U_{Z} der Zelle wenigstens außerhalb der Ladepulse gemessen, um festzustellen, ob die Zelle außerhalb des Ladepulses, insbesondere während des Lastpulses die Ladeschlussspannung U_{Lmax} der Zelle erreicht. Zusätzlich oder alternativ kann die Spannung der Zelle kontinuierlich oder periodisch gemessen werden, um weitere Informationen über den Zustand der einen oder mehreren Zelle zu erhalten, wobei bei Überschreiten einer vorbestimmten Spannung der Zelle der Ladevorgang abgebrochen oder unterbrochen wird. Sollte die Spannung an einer Zelle über die vorbestimmte Spannung der Zelle ansteigen, weist die Zelle eine Unregelmäßigkeit auf, die während des Weiterladens berücksichtigt werden muss. Entweder durch Anpassen der Ladestromhöhe bzw. Laststromhöhe oder im Extremfall durch Abbrechen des Ladeverfahrens oder durch Unterbrechen zur Abkühlung der Zelle. Um den Zustand der Zelle festzustellen, wird erfindungsgemäß während wenigstens eines Lastpulses und/oder Ladepulses eine Spannungsmessung an der Zelle vorgenommen. In einem bevorzugten Ausführungsbeispiel wird in allen Lastpulsen eine Spannungsmessung vorgenommen. Da die Spannungsmessung an der Zelle nur unter Last eine realistische Aussage über den Zustand der Zelle ermöglicht, wird die Spannung während der Lastpulse gemessen. Besonders vorteilhaft ist es hier, wenn die Spannung am Ende des Lastpuls gemessen wird, da dann der stabilste Zustand der Zelle erreicht ist. D.h. die Spannung wird zu dem Zeitpunkt erfasst, bevor der Lastpuls sein Maximum verlässt und der Strom in Richtung 0 verläuft. Eine Spannungsmessung ohne Last kann Spannungswerte ergeben, die im Lastzustand nicht mehr erreicht werden können, da dann die Spannung extrem ansteigt und der Strom zusammenbricht. Zur besseren Steuerung der Ladepulse und/oder Lastpulse und insbesondere der Höhe bzw. der Dauer der Pulse ist es erfindungsgemäß vorgesehen die Spannung der Zelle auch während des Ladepulses zu messen, insbesondere um Spannungsabweichungen nach oben zu erkennen oder zu erkennen, ob bereits die Ladeschlussspannung erreicht wird.

Vorzugsweise beträgt der Ladestrom I_{L} während der Ladepulse mehr als das 1,5 fache des maximal zugelassenen Ladestroms I_{Lmax} der Zelle, vorzugsweise das 2-fache des maximal zugelassenen Ladestroms I_{Lmax} oder größer.

Insbesondere wird die Höhe des Ladestroms I_{L} während der Ladepulse und/oder die Höhe des Entladestroms I_{Last} während der Lastpulse abhängig vom Zustand der Zelle und/oder abhängig vom Innenwiderstand der Zelle und/oder der Temperatur der Zelle eingestellt.

In einer vorteilhaften Ausgestaltung ist die Höhe des Ladestroms I_{L} in aufeinanderfolgenden Ladepulsen und/oder die Höhe des Entladestroms I_{Last} in aufeinanderfolgenden Lastpulsen verschieden, d.h. sie ist jeweils an den Zustand der Zelle angepasst, wobei hier zur Zustandserfassung bspw. die Spannungsmessung und/oder eine Temperaturmessung verwendet werden können. Insbesondere wird der Ladevorgang bei Überschreiten einer vorbestimmten Temperatur der Zelle beendet oder unterbrochen. Dabei kann die Höhe des Entladestroms I_{Last} für den darauf folgenden Lastpuls in Abhängigkeit der Spannungsmessung eingestellt werden.

In einer vorteilhaften Ausgestaltung entspricht die Länge eines Lastpulses t_{EL} ca. 1/3 der Länge eines Ladepulses t_{L}. Dabei ist die Dauer des Lastpulses abhängig von der Höhe des Laststroms. Dadurch wird sichergestellt, dass während der Ladepulse nicht nur ein höherer Strom zugeführt als während des Lastpulses entnommen wird, sondern auch, dass während des Ladepulses der höhere Strom länger zugeführt wird, als während des Lastpulses, bei dem der Zelle Energie entnommen wird. Allerdings sind auch Verhältnisse von 3/4 für Ladepuls und 1/4 für den Lastpuls möglich. Der Lastpuls darf dabei nicht zu lang gewählt werden, da ansonsten das Aufladen der Zelle unnötig verlängert wird. In einem bevorzugten Ausführungsbeispiel lassen sich die Zeiten der Pulse bzw. deren Verhältnis zueinander einstellen, insbesondere über die Eingabeeinheit am Ladegerät.

Erfindungsgemäß wird nach Erreichen einer vordefinierten Anzahl n von Lastpulsen, in denen die gemessene Spannung U_{Z} der Ladeschlussspannung U_{Lmax} der Zelle entspricht, das Aufladen der Zelle beendet, wobei n vorzugsweise =1 ist. D.h. nachdem die Spannung U_{Z} die Ladeschlussspannung U_{Lmax} erreicht hat, wird das Pulsladeverfahren beendet. Weiter wird zur Lösung der Aufgabe eine Vorrichtung zum Laden wenigstens einer auf Lithium-Ionen basierten wiederaufladbaren Zelle angegeben, umfassend einen Controller der eingerichtet ist, das oben beschriebene Verfahren auszuführen.

Vorzugsweise wird eine Senke verwendet, um die Zelle während der Lastpulse zu entladen, wobei die Dauer und Höhe des Lastpulses einstellbar ist. Dazu wird bspw. wenigstens ein Kondensator verwendet, der während eines Lastpulses geladen und/oder während des Ladepulses entladen wird.

In einer vorteilhaften Ausgestaltung umfasst die Vorrichtung weiter einen Speicher zur Speicherung von verschiedenen Parametern für das Ladeverfahren; ein Display zur Ausgabe von gemessenen Werten; eine Eingabeeinheit zur manuellen Beeinflussung des Ladeverfahrens und zur Eingabe von vorbestimmten Werten; einen Temperatursensor zur kontinuierlichen bzw. periodischen Temperaturüberwachung der Zelle, ein Speichermodul das wenigstens eine auf Lithium-Ionen basierte wiederaufladbare Zelle enthält, und einen Zähler zur Erfassung von Ladepulsen und/oder Lastpulsen während des Pulsladeverfahrens.

Vorzugsweise wird die Zelle zwischen zwei positiven Ladepulsen mittels eines Lastpulses entladen. Wie bereits oben beschrieben, werden dadurch die gebildeten Dendriten abgebaut. Es sind aber auch andere Lademuster möglich, bei denen zwischen zwei Ladepulsen nur eine Pause erfolgt und erst nach zwei oder mehreren Ladepulsen wieder ein Lastpuls erfolgt. Dies hat jedoch einen Einfluss auf die Ladezeit, da dann der Ladestrom während der Ladepulse nicht so groß gewählt werden kann, als wenn zwischen allen Ladepulsen ein Lastpuls folgen würde. D.h. mit steigendem Ladezustand kann die Höhe des Lastpulses steigen, um Remanenz abzubauen. Durch die adaptive Ausgestaltung der Höhe und Dauer der Ladepulse bzw. der Lastpulse ist es möglich, auf Besonderheiten während des Ladevorgangs zu reagieren, bspw. auf externe Temperatureinwirkungen. Ebenso können Abweichungen von Spannungstrends während der Ladepulse und/oder Lastpulse auftreten, die auf eine ungleiche Ablagerung des Lithiums hindeuten oder auch auf eine kurzzeitige Erwärmung der Elektroden zurückzuführen sind.

Wenn die Spannungsmessung während des Ladepulses einen Spannungsanstieg außerhalb des Spannungstrends anzeigt, kann dies auf eine Unregelmäßigkeit beim Laden hindeuten, die beispielsweise auf einen verstärkten Dendritenaufbau oder einen Temperaturanstieg hindeutet, wodurch der Innenwiderstand der Zelle steigt. Um diesem Spannungsanstieg entgegenzuwirken, kann die Höhe des nächstfolgenden Ladepulses im Vergleich zum vorherigen Ladepuls reduziert werden. D.h wenn die Spannung an der Zelle abrupt steigt, wird der Strom im nächsten Ladepuls reduziert. Vorzugsweise wird eine Reduktion um ca. 50% vorgenommen, so dass bei einem 2-fachen Ladestrom im vorherigen Ladepuls nun für einen Ladepuls nur mit dem einfachen zugelassenen Ladestrom geladen wird. Vorzugsweise kann auch der nächste Lastpuls oder der auf den reduzierten Ladepuls folgende Lastpuls um 50% im Vergleich zu dem vorherigen Lastpuls reduziert sein. An der während des Lastpulses gemessenen Spannung lässt sich nun ableiten, ob der nächstfolgende positive Ladepuls auch wieder reduziert werden muss oder wieder mit erhöhtem Ladestrom durchgeführt wird. Wenn die Spannung während des Lastpulses mit reduzierter Last wieder im vorgegebenen Toleranzbereich liegt, kann der nächstfolgende positive Ladepuls wieder mit dem zuvor angewendeten erhöhten Ladestrom durchgeführt werden. Dann kann auch der nächstfolgende Lastpuls wieder mit der zuvor angewendeten Last vorgenommen werden, um die Zelle kurzzeitig zu entladen und für den nächsten positiven Ladepuls mit erhöhtem Ladestrom vorzubereiten. Durch die Reduzierung des Ladestroms bzw. des Entladestroms wird der Zelle die Möglichkeit gegeben, bspw. die Temperatur der Elektroden wieder zu reduzieren.

Die Spannung der Zelle kann bspw. wegen eines defekten PTCs ansteigen oder wenn der Innenwiderstand der Zelle zu hoch wird, da die Elektroden zu heiß geworden sind. Dann werden vorzugsweise sowohl die Ladepulse als auch die Lastpulse reduziert, bis sich die Spannung der Zelle wieder in den vorgegebenen Spannungstrends befindet.

Erfindungsgemäß wird das Aufladen der Zelle beendet, nachdem während wenigstens eines Lastpulses die gemessene Spannung der Ladeschlussspannung der Zelle entspricht.

Besonders vorteilhaft ist es, wenn die letzten Lastpulse vor Erreichen einer 100% Ladung der Zelle ca. 25% größer sind als die vorherigen Lastpulse, da mit steigender Spannung die Remanenz der Zelle höher wird, die dann mit einem größeren Lastpuls abgebaut werden muss. Zusätzlich oder alternativ wird der Strom vom nächsten Ladepuls verkleinert, wenn die Spannung während des Lastpulses die Ladeschlussspannung erreicht. Vorzugsweise wird der Strom im nächsten Ladepuls halbiert, und zwar so lange, bis bei den nächsten Lastpulsen die Ladeschlussspannung stabil bleibt. Dann ist die Zelle nahezu zu 100% geladen.

Bei allen Verfahrensschritten ist es vorteilhaft, die Temperatur der Zelle kontinuierlich oder periodisch zu messen. Dadurch erhält man eine weitere Information, ob sich die zu ladende Zelle während des Aufladens normal verhält. Solange wie die Temperatur unterhalb vorbestimmter Grenzwerte liegt, wird das Ladeverfahren fortgeführt. Einem Temperaturanstieg unterhalb von vorbestimmten Grenzwerten kann durch Reduzierung der Höhe bzw. Dauer der Ladepulse und/oder Lastpulse entgegengewirkt werden. Die Temperatur sollte zumindest während des Ladepulses bzw. des Lastpulses überwacht werden. Bei Überschreiten einer vorbestimmten Temperatur (Tₘₐₓ) für eine vorbestimmte Zeit, bspw. 45°C für einen oder mehrere Ladepulse wird der Ladevorgang der Zelle abgebrochen. Die kritische Temperatur liegt für Hochenergiezellen als auch für Hochstromzellen bei 47-48°.

Bisher wurde das Ladeverfahren insbesondere in Bezug auf die Pulsladephase beschrieben. Durch die oben beschriebene Pulsladephase lässt sich eine enorme Zeitersparnis beim Laden einer Zelle erreichen. So ist es mit dem erfindungsgemäßen Ladeverfahren möglich, innerhalb von 20% der üblichen Ladezeit die Zelle zu laden, ohne dass sich die Zelle erwärmt oder dauerhaften Schaden nimmt. Der kurze Wechsel zwischen hohen Ladepulsen und Lastpulsen verhindert ein Ansteigen der Temperatur der Zelle über eine kritische Temperatur, so dass auch die Widerstände der Elektroden gleich bleiben und somit einer ungleichen Verteilung des Lithiums entgegengewirkt wird.

Die im Folgenden beschriebene und nicht beanspruchte Anladephase dient der Aktivierung der Zelle. Sie ist insbesondere dafür wichtig, tief entladene Zellen langsam auf das Pulsladeverfahren vorzubereiten. Aber auch eine Anwendung der Anladephase allein führt zu Verbesserungen beim Laden von Lithium-Ionen Zellen.

Batterien sind meist aus mehreren Zellen zusammengesetzt, die parallel oder in Reihe geschaltet sind. In derartigen Batterien oder Akkupacks ist ein Balancer vorgesehen, der normalerweise ein Tiefentladen der Zellen verhindert. Bei herkömmlichen Zellen wird eine Zelle als "entladen" bezeichnet, wenn sie noch 30% ihrer Kapazität aufweist. Wenn Zellen tiefer entladen werden als 30%, spricht man von einer Tiefentladung. Dies kann einerseits durch einen defekten Balancer eintreten oder auch, wenn die Zellen bei extrem tiefen Temperaturen belastet werden oder im entladenen Zustand bei tiefen Temperaturen gelagert werden

Deshalb wird zur weiteren Verbesserung des Ladeverfahrens vor der Pulsladephase die Anladephase durchgeführt, die die folgenden Schritte umfasst: Messen der Spannung der Zelle U_{Z} ohne Last, Einstellen einer Ladestromhöhe I_{L} abhängig von der gemessenen Spannung U_{Z}, Einstellen der Steigerung des Ladestroms I_{L} bezogen auf eine vordefinierte Zeit t_{A}, Laden der Zelle mit einem Ladestrom I_{L} innerhalb einer ersten linearen Anstiegsphase bis auf die eingestellte Ladestromhöhe über die vordefinierte Zeit t_{A}, wobei der Ladestrom I_{L} maximal dem maximal zugelassenen Ladestrom I_{Lmax} der Zelle entspricht, wobei nach Erreichen der eingestellten Ladestromhöhe die Spannung U_{Z} der Zelle unter einer vordefinierten Last gemessen wird und die erste lineare Anstiegsphase in Abhängigkeit der unter Last gemessenen Spannung U_{Z} der Zelle ein oder mehrmalig wiederholt wird.

Vorzugsweise wird, wenn die gemessene Spannung U_{Z} der Zelle nach einer ersten Anstiegsphase über einem ersten Schwellwert und unter einem zweiten Schwellwert liegt, eine zweite lineare Anstiegsphase mit einem Ladestrom I_{L} durchgeführt, der über dem maximal zugelassenen Ladestrom I_{Lmax} der Zelle liegt. Insbesondere wird gemessen, ob die Spannung U_{Z} der Zelle unter Last eine vordefinierte minimale Spannung erreicht, die eine Pulsladung erlaubt, wobei dann die Pulsladephase nach Erreichen der vordefinierten minimalen Spannung, bspw. der Entladeschlussspannung, begonnen wird.

Wie oben erwähnt, gehört zur Anladephase u.a. eine erste Messung der Spannung der Zelle ohne Last, d.h. eine Messung ohne vorher Strom zuzuführen. Wenn die Zelle dabei keine Spannung zeigt, ist von einer defekten Zelle auszugehen. In Abhängigkeit der gemessenen Spannung wird nun eine Ladestromhöhe eingestellt. Die Ladestromhöhe während der Anladephase ist für eine erste Anstiegsphase auf die maximal zugelassene Ladestromhöhe begrenzt. Weiter wird die Steigung bzw. die Zeit eingestellt, in der der Ladestrom von Null oder einem niedrigen Anfangswert bis auf die festgelegte Ladestromhöhe ansteigen soll. Zeigt die Spannungsmessung eine sehr niedrige Spannung, sollte beispielsweise 50% des maximal zugelassenen Ladestroms während der ersten Anstiegsphase angewendet werden. Je geringer die Spannung je länger sollte auch die Zeit für die erste Anstiegsphase dauern, d.h. der Anstieg des Ladestroms ist bei einer niedrigen Spannung auch geringer.

Danach erfolgt ein Laden der Zelle mit dem festgelegten Ladestrom innerhalb einer ersten linearen Anstiegsphase bis auf die eingestellte Ladestromhöhe, z.B. 1A über die vordefinierte Zeit, z.B. 1min, wobei der Ladestrom maximal dem maximal zugelassenen Ladestrom der Zelle entspricht. Diese Aufladung dient der Aktivierung der Zelle, so dass die Ionen langsam anfangen, von einer Elektrode zur anderen zu wandern. Nach Erreichen der eingestellten Ladestromhöhe erfolgt eine Pause ohne Ladestromzufuhr. Auch hier kann bereits die Spannung der Zelle gemessen werden. Dann wird die Spannung der Zelle bei einer vordefinierten Last gemessen. Die vordefinierte Last ist dabei ähnlich oder gleich wie ein Lastpuls in der Pulsladephase. Zusätzlich kann vor und/oder nach dem Lastpuls zur Spannungsmessung auch eine Pause ohne Stromzufuhr zwischengeschaltet werden. In Abhängigkeit der unter Last gemessenen Spannung der Zelle wird die erste Anstiegsphase wiederholt. Eine Wiederholung ist dann wichtig, wenn die Spannung unter Last noch nicht den gewünschten Wert aufweist. Beispielsweise wird die erste Anstiegsphase wiederholt, wenn die Entladeschlussspannung der Zelle nach der ersten Anstiegsphase noch nicht erreicht wird. Diese erste Anstiegsphase mit einem Ladestrom, der maximal dem Nennladestrom entspricht, kann abhängig vom Zelltyp und vom Zustand der Zelle auch mehrmals wiederholt werden. Nachdem die Zelle unter Last eine Spannung aufweist, die bspw. mehr als 5% über der Entladeschlussspannung liegt, kann vorzugsweise eine zweite Anstiegsphase erfolgen, bei der die Zelle linear ansteigend bis auf einen vordefinierten Ladestrom geladen wird, der höher als der Nennladestrom ist. Beispielsweise kann die Zelle während der zweiten Anstiegsphase bis auf den doppelten Nennladestrom geladen werden. Auch nach Abschluss dieser zweiten Anstiegsphase wird die Spannung der Zelle unter Last gemessen. Wenn jetzt eine Spannung erreicht wird, die einen vordefinierten Wert aufweist, bei dem die Zelle zur Pulsladephase geeignet ist, wird die Anladephase beendet. Wenn die Entladeschlussspannung bereits nach einer oder mehreren ersten Anstiegsphasen erreicht wird, kann die zweite Anstiegsphase auch ausgelassen werden.

Im Folgenden werden Beispiele der Erfindung anhand von Figuren beschrieben.
Fig. 1 zeigt einen Aufbau einer üblichen Lithium-Ionen-Zelle.
Fig. 2 zeigt eine Lithium-Ionen-Zelle im aufgewickelten Zustand;
Fig. 3 zeigt einen schematischen Stromsignalverlauf eines erfindungsgemäßen Ladeverfahrens für eine Hochenergiezelle;
Fig. 4 zeigt einen Strom-, Spannungsverlauf zu Beginn eines erfindungsgemäßen Pulsladeverfahrens bei einem Speichermodul mit 10 Hochenergiezellen
Fig. 5 zeigt einen Strom-, Spannungsverlauf am Ende des erfindungsgemäßen Pulsladeverfahrens bei einem Speichermodul mit 10 Hochenergiezellen;
Fig. 6 zeigt einen Strom- und Spannungsverlauf des erfindungsgemäßen Pulsladeverfahrens bei einem Speichermodul mit 10 Hochenergiezellen;
Fig. 7 zeigt ein Flussablaufdiagramm für ein erfindungsgemäßes Ladeverfahren;
Fig. 8 zeigt ein Flussablaufdiagramm für eine Anladephase;
Fig. 9 zeigt ein Ausführungsbeispiel eines Signalverlaufs während der Anladephase gemäß eines anderen Ausführungsbeispiels.
Fig. 10 zeigt einen schematischen Aufbau eines Ladegeräts zur Anwendung des erfindungsgemäßen Pulsladeverfahrens.
Fig. 11 zeigt ein Speichermodul bei dem das erfindungsgemäße adaptive Pulsladeverfahren eingesetzt wird.

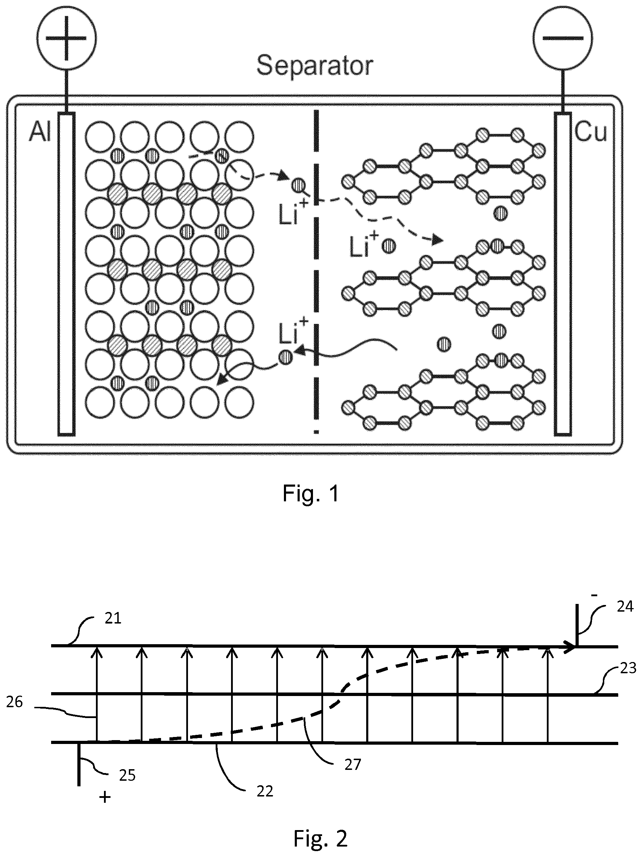

In Fig. 1 ist der schematische Aufbau einer Lithium-Ionen-Zelle gezeigt, die eine Kathode und eine Anode aufweist. Während des Ladevorgangs wandern Lithium-Ionen von der positiven Elektrode zur negativen Elektrode, die beispielsweise mit Lithiumgraphit beschichtet ist. Während des Endladevorgangs wandern die Lithium-Ionen wieder von der negativen Elektrode zurück zur positiven Elektrode. Die beiden Elektroden sind dabei durch einen Separator voneinander getrennt, wobei die Lithium-Ionen durch diesen Separator hindurch wandern.

Lithium-Ionen-Zellen zeichnen sich im Vergleich zu anderen wiederaufladbaren Zellen dadurch aus, dass sie keinen Memory-Effekt aufweisen und die Selbstentladung sehr gering ist. Die übliche Ladeschlussspannung U_{Lmax} von Lithium-Ionen-Zellen liegt bei 4,2V, wobei von einer Nennspannung von 3,6V ausgegangen wird. Zu den Lithium-Zellen gehören z.B. Lithium Polymer-Zellen, Lithium-Eisensulfat-Zellen, LithiumGraphit-Zellen und Lithium-Kobalt-Zellen.

Fig. 2 zeigt eine Lithium-Ionen-Zelle im aufgewickelten Zustand. Die Anode 21 und die Kathode 22 liegen sich gegenüber und sind durch einen Separator 23 voneinander getrennt. Die Anschlussfahnen 24 und 25 an den Elektroden 21 und 22 liegen sich diagonal gegenüber. Das heißt, der elektrische Widerstand in den Elektroden nimmt mit Zunahme der Leitungslänge zu. Somit ist der elektrische Widerstand in den Elektroden mit zunehmendem Abstand zur Anschlussfahne größer. Folglich sind die Lithium-Ionen bemüht, auf ihrem Weg von der positiven zur negativen Elektrode den Weg des geringsten elektrischen Widerstands zu nehmen, der jedoch nicht durch die unmittelbar gegenüberliegende Elektrode gebildet wird, sondern sich durch die Zelle hindurch zwischen den Elektroden befindet (mit 27 angedeutet). Aufgrund der kurzen Ladepulse mit einem Ladestrom I_{L}, der höher als der Nennladestrom I_{Lmax} einer Zelle ist, werden somit die Lithium-Ionen zur anderen Elektrode getrieben, ohne dass sie Zeit haben, sich den Weg des geringsten elektrischen Widerstands zu suchen. Folglich wird der Separator 23 formiert und ermöglicht somit einen gleichmäßigen Ionenaustausch zwischen den zwei sich gegenüberliegenden Elektroden 21 und 22. Durch die zeitliche Begrenzung des Ladepulses als auch des Lastpulses wird darüber hinaus verhindert, dass sich die Temperatur der Elektroden 21, 22 übermäßig erhöht, wodurch sich der Innenwiderstand der Elektroden erhöhen würde, was ebenso zu einer ungleichen Widerstandsverteilung führen würde, wodurch einerseits die Temperatur der Elektroden weiter ansteigen würde und andererseits sich die Lithiumverteilung innerhalb der Zelle verändern würde und eine Ungleichverteilung der Ablagerung von Lithium entstehen würde. Eine ungleiche Ablagerung von Lithium hätte zur Folge, dass einerseits nicht mehr die vollständige chemische Reaktionsfläche zwischen den Elektroden zur Verfügung steht, wodurch die maximal möglichen Ladezyklen reduziert werden. Andererseits würde durch ein ungleichmäßiges Aufwachsen der Lithiumablagerung auf einer der Elektroden irgendwann der Separator erreicht und durchstoßen werden, so dass es zu einem elektrischen Kurzschluss kommen würde. Aufgrund der kurzen Ladepulse bzw. Lastpulse wird dem entgegen gewirkt, wobei die Verhinderung eines übermäßigen Temperaturanstiegs besonders wichtig ist. Mit dem Bezugszeichen 27 ist ein Weg der Lithium-Ionen gezeigt, welche versuchen den Weg des geringsten elektrischen Widerstands zu nehmen. Würde die Zelle nicht mit den kurzen hohen Ladepulsen bzw. Lastpulsen geladen bzw. entladen werden, würden die Lithium-Ionen versuchen, den mit dem Bezugszeichen 27 dargestellten Weg zu nehmen, was zu einer Ungleichverteilung der Lithiumablagerung an den Elektroden führen würde.

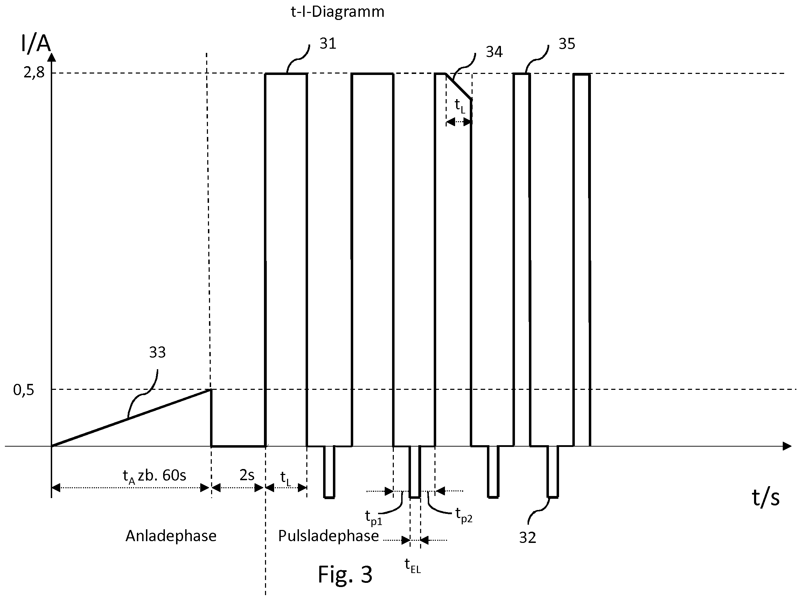

Fig. 3 zeigt einen Signalverlauf des Ladestroms über der Zeit für ein erfindungsgemäßes Ladeverfahren mit einer Anladephase und einer adaptiven Pulsladephase für eine einzelne Zelle. Das Ladeverfahren ist hier für eine Hochenergiezelle mit einer Kapazität von 3,1 Ah exemplarisch dargestellt. Eine derartige Zelle weist eine Ladeschlussspannung U_{Lmax} von 4,2V auf und eine Nominalspannung von 3,6 V. Die Entladeschlussspannung U_{EL} beträgt 2,5V. Der max. zugelassene Ladestrom I_{Lmax} beträgt ca. 900mA und der nominale Entladestrom beträgt ca. 600mA.

Bei diesem Ladeverfahren wird die Zelle während der Anladephase mit einer ersten Anstiegsphase 33 mit einem von 0 auf ca. 0,5A ansteigenden Ladestrom innerhalb von einer Minute geladen. Nach dieser einen Minute wird der Ladevorgang für eine Dauer für 2s angehalten, d.h. der Zelle wird kein Ladestrom mehr zugeführt, wobei dann die Spannung der Zelle zuerst ohne und danach mit einer vorbestimmten Last gemessen wird (nicht im Signalverlauf dargestellt). Nach Ablauf der zwei Sekunden und einer gemessenen Spannung oberhalb der Entladeschlussspannung von 2,5V wird die Anladephase beendet und zum Pulsladeverfahren übergegangen.

In der Pulsladephase beträgt die Pulsdauer der positiven Ladepulse 31 anfänglich 5s, wobei die Dauer der Lastpulse 32 1,3s beträgt. Es wird darauf hingewiesen, dass diese Werte exemplarisch sind und in den oben angegebenen Bereichen variieren können. Während der Lastpulse 32 wird die Zelle mit 300 mA belastet, wobei innerhalb eines Lastpulses 32 die Spannung U_{Z} der Zelle gemessen wird. Beträgt die Spannung an der Zelle während dieser Belastung mehr als 4,2V ist der Ladevorgang abgeschlossen. Es ist zwar nicht dargestellt, jedoch können auch Lastströme von bis zu 2,8A während der Lastpulse fließen, um den Freispüleffekt zu verbessern.

Innerhalb der Zelle passiert während des erfindungsgemäßen Ladevorgangs folgendes: Die im Inneren der Zelle während der Ladepulse 31 entstehenden Kristalle können den Separator 23 der Zelle beschädigen, wodurch diese an Ladung und Kapazität verlieren würde. Darüber hinaus behindern die Kristalle die Ionenbewegung zwischen den Elektroden 21, 22, wodurch die Lebensdauer der Zelle deutlich reduziert werden würde. Da jedoch in den erfindungsgemäßen Lastpulsen 32, die zwischen den Ladepulsen 31 liegen, diese Kristalle durch die Belastung sofort wieder abgebaut werden, wird die negative Wirkung der Kristalle aufgehoben. Dadurch wird ein wesentlicher Vorteil des erfindungsgemäßen Ladeverfahrens erreicht. Gemäß dem erfindungsgemäßen Ladeverfahren gemäß Fig. 3 wird während der Pulsladephase mit Ladepulsen 31 von jeweils 2,8A gearbeitet, wobei der Ladestrom damit ca. 3x größer ist als der maximal zugelassene Ladestrom von 980mA für die Hochenergiezelle.

Bei anderen herkömmlichen Ladeverfahren wird mit einem konstanten Ladestrom gearbeitet, der jedoch bei Erreichen der Ladeschlussspannung U_{Lmax} abgesenkt wird. Durch den sinkenden Strom bei Erreichen der Ladeschlussspannung U_{Lmax} ist insbesondere für die Ladung der restlichen Kapazität einer Zelle eine deutlich erhöhte Ladezeit erforderlich. Bei den traditionellen Ladeverfahren ohne Lastpuls wird darüber hinaus während der Unterbrechung der Ladepulse die Spannung gemessen. Da somit keine Lastpulse angewendet werden, werden die während des Ladens gebildeten Kristalle bzw. Dendriten, die den Separator 23 beschädigen können, nicht abgebaut. Dadurch, dass diese Kristalle nicht wieder abgebaut werden, darf bei einem üblichen Ladeverfahren nie mit einem erhöhten Ladestrom geladen werden, der über dem maximal zugelassenen Ladestrom I_{Lmax} liegt.

Es gibt auch Ladeverfahren, die mit einem kontinuierlich ansteigenden Strom laden, wobei jedoch ein kontinuierlich ansteigender Ladestrom I_{L} eine Degenerierung der Zelle nach sich zieht, insbesondere wenn die Zelle auf 100% geladen werden soll. Außerdem ist bei Ladeverfahren mit kontinuierlich ansteigendem Ladestrom ein erheblicher Temperaturanstieg zu beobachten.

Durch das erfindungsgemäße Ladeverfahren wird eine definierte Senke während des Lastpulses 32 eingesetzt, um die Kristalle bzw. Dendriten abzubauen und einem kritischen Temperaturanstieg entgegenzuwirken. Durch die andauernd während der Lastpulse abgebauten Kristalle bzw. Dendriten kann mit einem höheren Ladestrom gearbeitet werden, wodurch sich eine drastische Reduzierung der Ladezeit ergibt. Durch die kurzen Pulse wird eine übermäßige Temperatursteigerung vermieden und somit die Zelle sehr schonend geladen, so dass auch durch die höheren Stromwerte keine Einbuße bei der Lebensdauer der Zelle entsteht. Darüber hinaus ist die Selbstentladung aufgrund der nicht vorhandenen Kristalle nahezu nicht existent, wodurch sich eine aufgeladene Zelle im Ruhezustand oder im abgekoppelten Zustand nicht entlädt und somit nicht degeneriert und auch nach Jahren der Lagerung eine volle Kapazität entfalten kann.

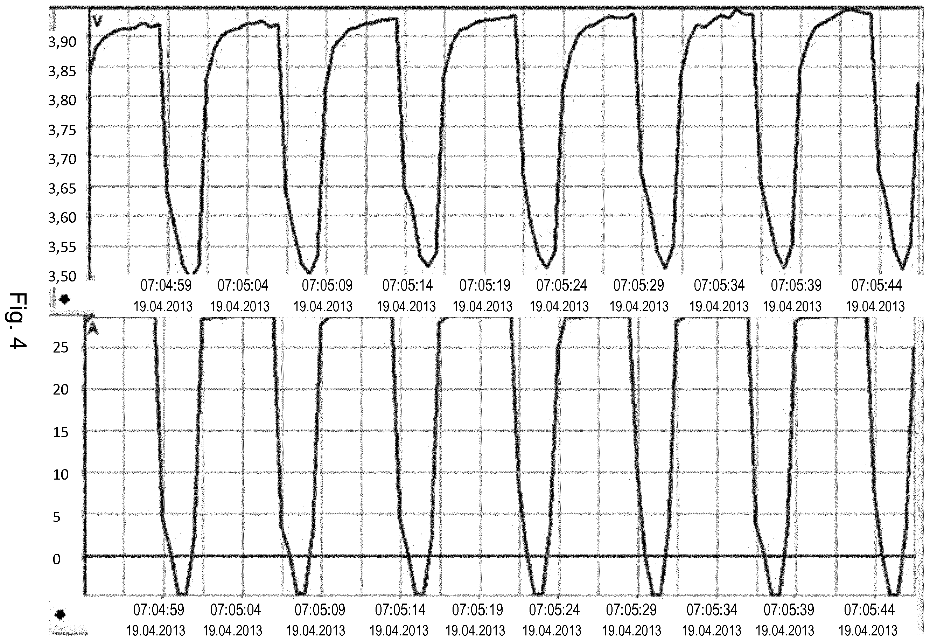

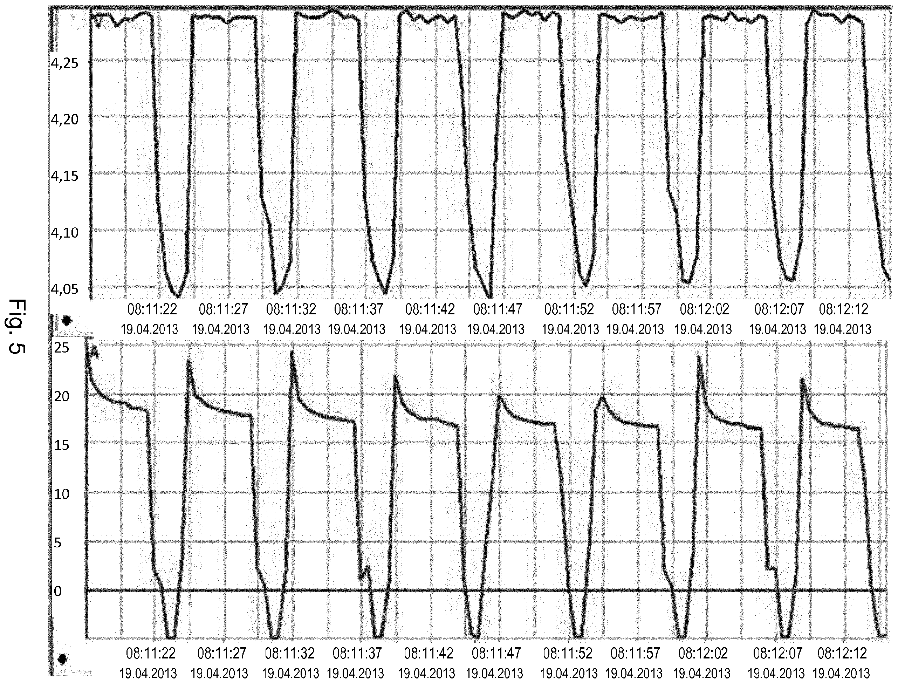

In Fig. 3 ist der Verlauf vom Ladestrom zum Laden einer Zelle dargestellt, wobei nach der Anladephase die Pulsladephase beginnt. Erfindungsgemäß wird vorgeschlagen, vor und/oder nach jedem Lastpuls 32 eine Ruhezeit tp1 und tp2 zwischenzuschalten. D.h. nach Abschalten der Spannung für den Ladepuls sinkt der Strom, der durch die Zelle fließt, auf Null. Die Ruhezeit tp1 nach einem Ladepuls und vor einem Lastpuls ist kürzer als die Dauer des Lastpulses t_{EL}, vorzugsweise im dargestellten Beispiel 0,3s. Die Ruhezeit tp2 nach dem Lastpuls und vor dem Ladepuls kann, wie in Figur 3 dargestellt, gleich der ersten Ruhepause tp1 sein, sie kann aber auch etwas länger sein als die erste Ruhezeit, bspw. 0,5s. Durch die Ruhezeiten wird der Zelle die Möglichkeit gegeben, sich auf die Änderung der Stromrichtung einzustellen, da der Strom der Spannung folgt und somit der Strom nicht sofort nach Abschalten der Ladespannung auf 0A absinkt, sondern dies nur allmählich geschieht, wie es in den Figuren 4 und 5 ersichtlich ist. Dieser Effekt ist in der Figur 3 nicht dargestellt.

Im dritten Ladepuls ist ein Absinken 34 des Ladestroms I_{L} zu erkennen. Dieses Absinken 34 tritt dann ein, wenn die Spannung an der Zelle während des Ladepulses die Ladeschlussspannung U_{Lmax} erreicht. Damit wird erreicht, dass die Spannung an der Zelle nicht weiter steigt. Bei herkömmlichen Pulsladeverfahren, würde nun der nächste Ladepuls mit einem reduziertem Ladestrom ablaufen, wobei der Ladestrom bei jedem erneuten Erreichen der Ladeschlussspannung U_{Lmax} immer weiter abgesenkt werden würde. Dies hat den entscheidenden Nachteil, dass die Energiemenge, die in die Zelle eingespeichert wird, immer geringer wird. Folglich würde sich die Ladezeit erheblich verlängern.

Erfindungsgemäß wird nun vorgeschlagen, dass nach einem Erreichen der Ladeschlussspannung U_{Lmax} die Dauer des nächsten Ladepulses 35 verkürzt wird. Dies ist deshalb vorteilhaft, da auch in den folgenden Ladepulsen mit dem erhöhten Ladestrom gearbeitet wird und trotzdem eine Reduktion der Ladezeit möglich ist. Hierbei sind mehrere Vorgehensweisen möglich. Einerseits kann der nächste Ladepuls 35 um die Zeit t_{d} verkürzt werden, in der im vorangegangenen Ladepuls der Ladestrom abgesenkt wurde. Es ist aber auch möglich, eine konstante Reduktion der Dauer des Ladepulses vorzunehmen. Bspw. kann bei einem Erreichen der Ladeschlussspannung U_{Lmax} der nächste Ladepuls 35 um einen vordefinierten Wert t_{R} reduziert werden (nicht dargestellt), also bspw. immer um 0,2s.

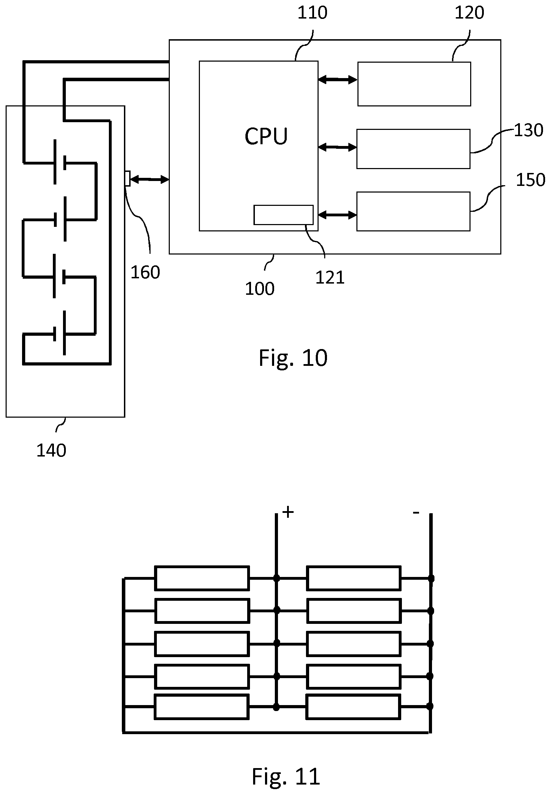

Fig. 4 zeigt einen Spannungs- und Stromverlauf zu Beginn des Pulsladeverfahrens, wobei im oberen Bereich der Spannungsverlauf während des Pulsladens dargestellt ist und im unteren Bereich der Figur der Stromverlauf. In den Figuren 4-6 sind jeweils 10 Zellen in einem Akkupack verbaut, bspw. wie es in Figur 11 dargestellt ist. Es ist deutlich erkennbar, dass die Spannungen während der dargestellten Ladepulse zu Beginn des Pulsladeverfahrens unter der Ladeschlussspannung U_{Lmax} liegt (3,85-3,95V), wobei die Spannung an der Zelle U_{Z} während der Lastpulse abfällt, da die Zelle noch am Anfang des Ladeprozesses steht und im Bereich von 3,5V liegt. Die korrespondierenden Stromverläufe während der Ladepulse bzw. der Lastpulse sind im unteren Bereich der Fig. 4 dargestellt. Hier ist ersichtlich, dass die Hochenergiezellen in dem Akkupack mit ca. 28A während der Ladepulse geladen werden. Der zugelassene Ladestrom I_{L} für eine Hochenergiezelle beträgt üblicherweise ca. 0,9A, d.h. bei 10 Zellen in einem Akkupack fließt ein Ladestrom von 9A. Folglich wird beim erfindungsgemäßen Ladeverfahren während der Ladepulse mit einem ca. 3-fachen Ladestrom I_{L} gearbeitet. Nachdem ein Ladepuls beendet ist und die Ladespannung U_{L} abgeschaltet wird, wird eine erste Ruhezeit tp1 abgewartet, bevor der Lastpuls angelegt wird, d.h. die Zelle wird mit einer Senke, bspw. einem Kondensator oder Widerstand, verbunden, die einen Strom in umgekehrte Richtung fließen lässt. Die Dauer der Lastpulse t_{EL} liegt deutlich unter 50% der Dauer des Ladepulses t_{L}, vorzugsweise bei 20-30%. Während des Lastpulses fließt in diesem Beispiel ein Entladestrom I_{Last} von 5A. Während der gesamten Senkenzeit tₛₑₙₖₑ, d.h. außerhalb der Ladepulse wird die Spannung an der Zelle Uz überwacht, um festzustellen, ob während des Lastpulses bereits die Ladeschlussspannung U_{Lmax} vorliegt. In den Lastpulsen gemäß Fig. 4 und 5 wird mit einem Laststrom I_{Last} von weniger als 3A gearbeitet. Versuche haben jedoch gezeigt, dass mit einem Laststrom I_{Last} 10A bzw. 18A, also ca 30% bzw. 55% vom Ladestrom, keine Verlängerung der gesamten Ladezeit erfolgt, sondern eine Erhöhung der Zyklen. D.h. mit Lastpulsen, die einen Laststrom von ca. 50% oder mehr vom Ladestrom aufweisen, lässt sich einer Degenerierung der Zelle effizient vorbeugen, ohne das die Ladezeit verlängert wird.

Wie einfach aus Figur 4 für einen Ladezyklus erkennbar ist, steigt bei jedem folgenden Ladepuls sowohl die Spannung an der Zelle Uz während des Ladepulses als auch die Spannung der Zelle U_{Z} während des Lastpulses. Figur 4 zeigt nur einen sehr kurzen Ausschnitt zu Beginn des erfindungsgemäßen Pulsladeverfahrens. Die Zeiten für die Ladepulse t_{L} bzw. Lastpulse t_{EL} lassen sich an der X-Achse ablesen. Hier ist ersichtlich, dass zwei Rastereinheiten (Kästchen) 5s entsprechen, d.h. ein Lastpuls dauert weniger als 2s, wobei ein Ladepuls ca. 5s dauert.

Ähnlich wie in Figur 4 ist in Figur 5 wiederum im oberen Bereich ein Spannungsverlauf bzw. im unteren Bereich ein Stromverlauf während des Pulsladeverfahrens dargestellt. Anders als in Figur 4 wird bei dieser Darstellung das erfindungsgemäße Pulsladeverfahren kurz vor seinem Ende betrachtet und dargestellt. Die Ladepulse weisen bereits eine Spannung von über 4,25V auf, was ca. der Ladeschlussspannung U_{Lmax} entspricht. Während der Lastpulse sinkt die Spannung der Zelle U_{Z} noch auf ca. 4 V ab. Dies ist ein deutliches Zeichen, dass die Zelle bereits nahezu vollständig geladen ist. Wenn die Ladeschlussspannung U_{Lmax} von ca. 4,25V während der Ladepulse erreicht ist, wie in Fig. 5 ersichtlich, wird der Ladestrom während der Ladepulse reduziert. Dies ist an dem steilen Anstieg des Ladestroms zu Beginn des Ladepulses zu erkennen, wobei der Ladestrom dann durch das Ladegerät deutlich abgesenkt wird. Ohne diese Absenkung würde die Spannung der Zelle U_{Z} weiter steigen. Erfindungsgemäß wird deshalb vorgeschlagen, dass die Dauer der Ladepulse t_{L} reduziert wird, nachdem die Ladeschlussspannung U_{Lmax} während der Ladepulse erreicht wird und nachdem das Ladegerät während eines Ladepulses den Ladestrom I_{L} reduziert, wie es im unteren Bereich der Fig. 5 zu erkennen ist. Hierzu wird jeweils die Dauer des Ladepulses t_{L} im oberen Bereich des Ladepulses vor dem Abschalten der Spannung betrachtet, was auch ein steiles Abfallen Stroms nach sich zieht. Dabei ist ersichtlich, dass in den ersten drei Ladepulsen die Ladepulsdauer t_{L} noch jeweils fast 5s beträgt. Hingegen wird die Ladepulsdauer der fortfolgenden Ladepulse verkürzt. Dies ist beispielsweise in den letzten Ladepulsen der Fig.5 zu erkennen, deren Breite im Bereich vor dem Abschalten der Spannung deutlich unter 5s liegt.

Der Hintergrund des Verkürzens der Dauer der Ladepulse ist der, dass durch die Reduzierung des Stroms innerhalb eines Ladepulses die Zelle nicht mehr effizient geladen wird und folglich die Zeit der Ladepulse nicht mehr effizient ausgenutzt wird. Um die Zeit der Ladepulse jedoch effektiv auszunutzen, wird erfindungsgemäß vorgeschlagen, die Dauer der Ladepulse t_{L} zu verkürzen, um somit einem Absenken des Ladestroms I_{L} während der Ladepulse durch das Ladegerät vorzubeugen und somit die Zelle mit dem maximal möglichen Ladestrom zu laden. Allerdings in einer reduzierten Dauer. D.h. die Menge der zugeführten Energie wird reduziert, aber mit Hinblick auf die Ladezeit wird versucht, den erhöhten Ladestrom (im Beispiel ca. 28A) während der Ladepulse solange wie möglich beizubehalten. Erst wenn sich eine Erhöhung der Spannung U_{Z} während des Ladepulses über die Ladeschlussspannung U_{Lmax} nicht mehr durch eine Reduzierung der Dauer eines Ladepulses t_{L} erreichen lässt, kann eine Reduzierung des Ladestroms während der Ladepulse vorgenommen werden, wenn in den Lastpulsen die Spannung an der Zelle U_{Z} immer noch unter der Ladeschlussspannung U_{Lmax} liegt. Das Reduzieren der Dauer und/oder das Absenken des Ladestroms wird solange vorgenommen bis entweder während der Lastpulse die Ladeschlussspannung erreicht ist oder die vorbestimmte Anzahl m von maximalen Lade/Lastpulsen erreicht ist. D.h. das Ladeverfahren wird entweder bei Vollendung der Ladung beendet oder, wenn ein hin und herschalten zwischen Last und Ladepuls eine kritische Anzahl von Lade und/oder Lastpulsen erreicht hat und keine Verbesserung des Ladezustands mehr erreicht wird.

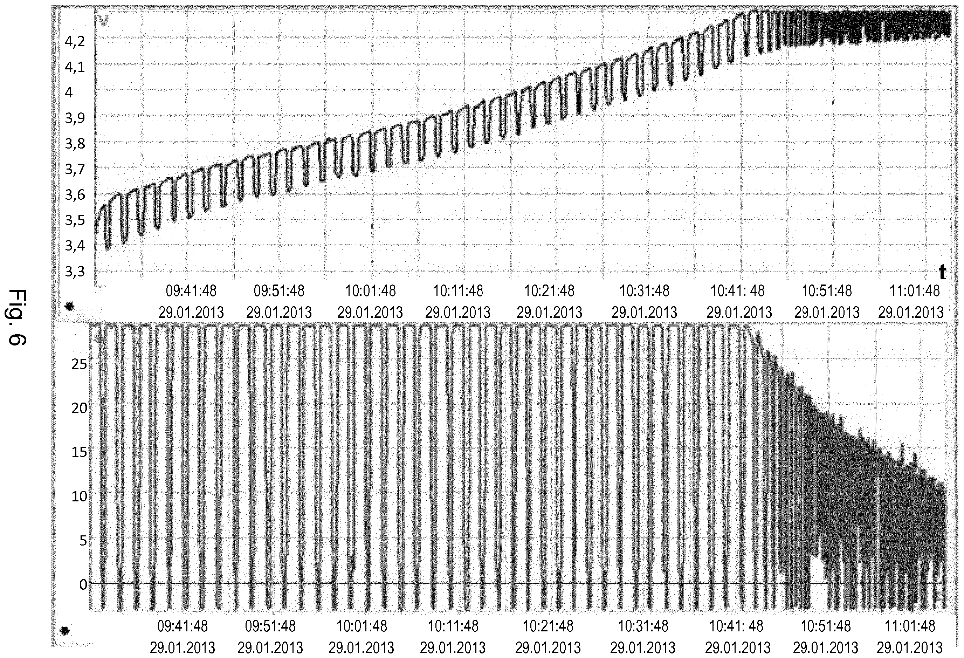

Die Figur 6 zeigt einen vollständigen Zyklus eines Pulsladeverfahrens, wobei im oberen Bereich die Spannung dargestellt ist und im unteren Bereich der Stromverlauf dargestellt ist. Es ist deutlich erkennbar, dass die Ladepulse bei 3,5V beginnen und bis auf 4,3V ansteigen, wobei beim Erreichen der 4,3V während der Ladepulse, was ca. der Ladeschlussspannung U_{Lmax} entspricht, eine Reduktion des Ladestroms während der Ladepulse erfolgt. Bis zu dem Zeitpunkt, an dem die Ladeschlussspannung U_{Lmax} erreicht ist, wird in den Ladepulsen bspw. ein 3facher Ladestrom I_{L} im Vergleich zum maximal zugelassenen Ladestrom I_{Lmax} angelegt. Nachdem die Ladeschlussspannung U_{Lmax} erreicht wurde (im hinteren Viertel der Darstellung), sinkt der Ladestrom. Es ist auch erkennbar, dass hier die Dauer der Ladepulse reduziert wird, um ein möglichst effizientes Pulsladen zu erreichen.

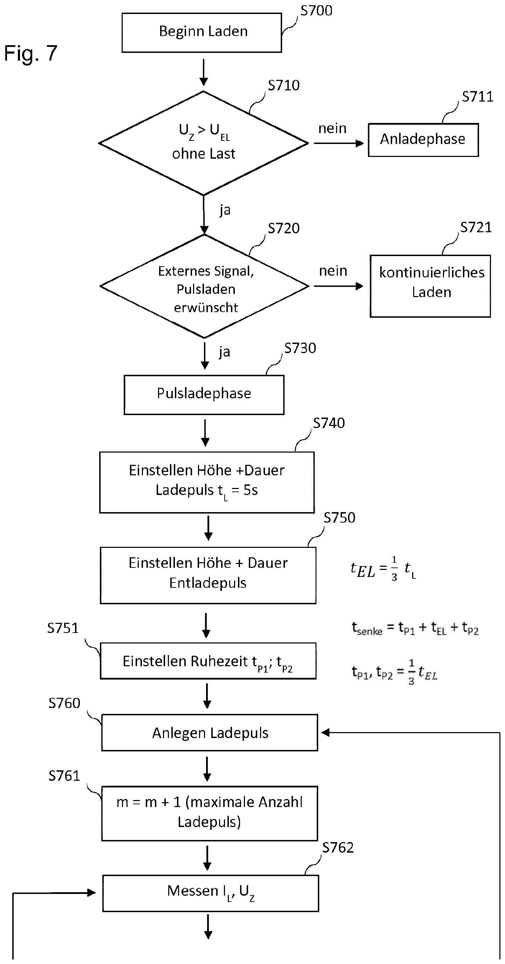

Figur 7 zeigt ein Flussablaufdiagramm des erfindungsgemäßen Pulsladeverfahrens. In Schritt S700 wird das Laden der Zelle begonnen. Wobei im Schritt S710 die Spannung der Zelle U_{Z} gemessen und überprüft wird, ob die Spannung an der Zelle U_{Z} über der Entladeschlussspannung U_{EL} liegt. Vorzugsweise wird diese Spannungsmessung ohne angelegte Last durchgeführt. Sollte sich herausstellen, dass die Spannung an der Zelle U_{Z} unter der Entladeschlussspannung U_{EL} liegt, ist die Zelle tief entladen und es muss eine vorbereitende Anladephase durchgeführt werden, wie es im Schritt S711 angedeutet ist. Liegt die Spannung an der Zelle über der Entladeschlussspannung U_{EL}, wird im Schritt S720 überprüft, ob ein Pulsladen erwünscht ist. Sollte beispielsweise ausreichend Zeit zur Verfügung stehen, so dass ein schnelles Pulsladen nicht notwendig ist, kann ein Speichermodul oder Zellen schonendes kontinuierliches Laden durchgeführt werden (S721). Ist jedoch aufgrund externer Bedingungen oder durch Benutzervorgaben ein schnelles Laden erforderlich, wird mit dem erfindungsgemäßen Pulsladen begonnen (S730). Dazu wird jeweils die Höhe und Dauer der Ladepulse eingestellt (S740), wobei in diesem Beispiel die Dauer der Ladepulse t_{L} bei 5s eingestellt ist und ein Strom I_{L} von ca. dem 3fachen des zugelassenen Ladestroms verwendet wird. Ähnlich wird die Höhe und Dauer des Lastpulses t_{EL} eingestellt, wobei die Dauer des Lastpulses ca. einem Drittel des Ladepulses entspricht (S750). Darüber hinaus werden in Schritt S751 die Ruhezeiten tp₁ und tp₂ eingestellt, wobei die Zeiten für tp₁ und tp₂ jeweils einem Drittel der Zeit des Lastpulses t_{EL} entsprechen. Die Summe der Ruhezeiten und des Lastpules t_{EL}+tp₁+tp₂ ergibt die Zeit tₛₑₙₖₑ außerhalb des Ladepulses.

In Schritt S760 wird somit der erste Ladepuls angelegt. In Schritt S761 wird für jeden angelegten Ladepuls ein Zähler m inkrementiert, um eine maximale Anzahl m_{Max} von Ladepulsen für das spätere Verfahren zu erfassen. Im Schritt S762 wird der Ladestrom I_{L} und die Spannung an der Zelle U_{Z} gemessen, wobei im Schritt S763 festgestellt wird, ob die Spannung an der Zelle Uz der Ladeschlusspannung U_{Lmax} entspricht. Sollte die Spannung an der Zelle U_{Z} nicht der Ladeschlussspannung U_{Lmax} entsprechen, wird überprüft, ob die abgelaufene oder verstrichene Zeit t bereits der Zeit des Ladepulses t_{L} entspricht (S766). Ist dies nicht der Fall, kehrt das Verfahren zum Schritt S762 zurück und überprüft weiter den Strom bzw. die Spannung während des Ladepulses. Entspricht die Spannung einer Zelle U_{Z} im Schritt S763 jedoch der Ladeschlussspannung U_{Lmax}, wird im Schritt S764 überprüft, ob innerhalb des Ladepulses der Ladestrom reduziert wird. Ist dies nicht der Fall, wird zum Schritt S766 gesprungen und die verstrichene Zeit t mit der Zeit des Ladepulses t_{L} verglichen. Tritt jedoch, wie in Figur 5 deutlich zu erkennen, eine Reduzierung des Ladestromes innerhalb des Ladepulses ein, um ein weiteres Ansteigen der Ladeschlussspannung U_{Lmax} zu unterbinden, wird die Dauer des Ladepulses t_{L} im Schritt S765 reduziert. Die Dauer der Reduktion t_{ΔL} kann dabei auf verschiedene Art und Weise eingestellt werden. Es kann beispielsweise ein fester Wert t_{R}, beispielsweise 0,02s verwendet werden, um den der nächste Ladepuls 0,02s reduziert wird. Es ist jedoch auch möglich, einen variablen Wert zu verwenden, der sich aus dem Zeitpunkt ergibt, zu dem der Ladestrom I_{L} während des Ladepulses beginnt abzufallen. Um diese Zeit t_{d} des Ladepulses, bei der der Ladestrom I_{L} absinkt und für die dieser Ladepuls nicht mehr effektiv für das Pulsladen verwendet wird, könnte folglich der nächste Ladepuls verkürzt werden. D.h. die Zeit, in der der Ladestrom innerhalb des Ladepulses nicht mehr den bspw. voreingestellten 3fachen Wert des maximal zugelassenen Ladestroms aufweist, wird beim nächsten Ladepuls abgezogen. Vorzugsweise wird, wenn der Ladepuls einmal reduziert wurde, der Ladepuls für das weitere Pulsladeverfahren nicht wieder verlängert.

Darüber hinaus wird ein weiteres oder erneutes Reduzieren der Dauer des Ladepulses t_{L} erst dann wieder vorgenommen, wenn sich während eines folgenden Ladepulses, der dann schon in seiner Dauer im Vergleich zum Anfangswert reduziert ist, erneut eine Reduktion des Ladestroms ergibt.

Nachdem der Ladepuls in Schritt S766 beendet ist, wird die Ladespannung U_{L} abgeschaltet und im Schritt S770 die erste Ruhezeit tp₁ abgewartet. Danach wird der Lastpuls im Schritt S780 aktiviert, d.h. die Zelle oder das Akkupack oder das Speichermodul wird mit einer Senke oder Last verbunden, wobei während dieses Lastpulses wiederum eine Spannungsmessung im Schritt S785 vorgenommen wird. Erreicht die Zelle während des Lastpulses die Ladeschlussspannung U_{Lmax}, wird das Ladeverfahren beendet, da die Zelle damit voll geladen ist. Um Messfehlern vorzubeugen, kann auch ein weiterer Lastpuls abgewartet werden, bei dem die Zelle dann wieder die Ladeschlussspannung U_{Lmax} aufweisen sollte.

Wird die Ladeschlussspannung U_{Lmax} während des Lastpulses nicht erreicht, wird im Schritt S790 eine weitere Ruhezeit tp_{P2} zwischen dem Lastpuls und dem nächsten Ladepuls abgewartet. Danach wird überprüft, ob die maximale Anzahl an Lade- und/oder Lastpulsen erreicht ist (S795). Allerdings kann diese Überprüfung auch vor dem Anlegen des ersten Ladepulses oder zu einem anderen geeigneten Zeitpunkt durchgeführt werden.

Ist die maximale Anzahl m_{Max} der Ladepulse erreicht, wird das Ladeverfahren beendet. Dies soll einem ineffizienten Hin- und Herschalten zwischen Ladepuls und Lastpuls im unteren Bereich, d.h. bei erreichter Ladeschlussspannung U_{Lmax} während der Ladepulse und reduzierter Ströme während der Ladepulse vorbeugen, da dies einem schnellen Laden der Zelle entgegenwirkt und die Zelle darüber hinaus auch weiter degenerieren lässt. Ist der voreingestellte Maximalwert m_{Max} an Lade- bzw. Lastpulsen noch nicht erreicht, wird zum Anlegen des nächsten Ladepulses im Schritt S760 zurückgekehrt. Die maximale Anzahl m_{Max} kann dabei sowohl die Anzahl der Ladepulse oder die Anzahl der Lastpulse definieren. Es können auch beide Pulsarten gezählt werden. Die maximale Anzahl m_{Max} basiert auf Erfahrungswerten und ist im vorliegenden Beispiel auf 1010 Pulse begrenzt.

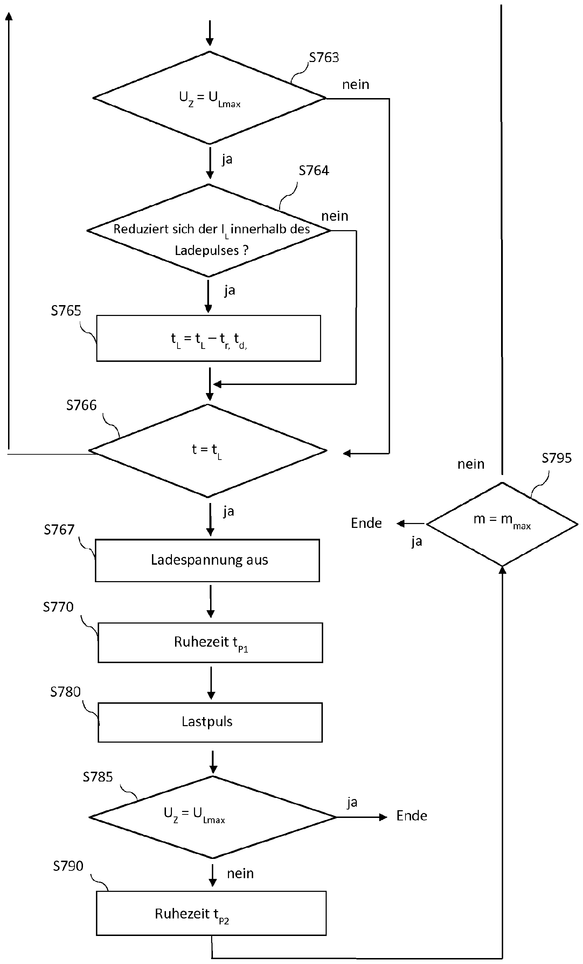

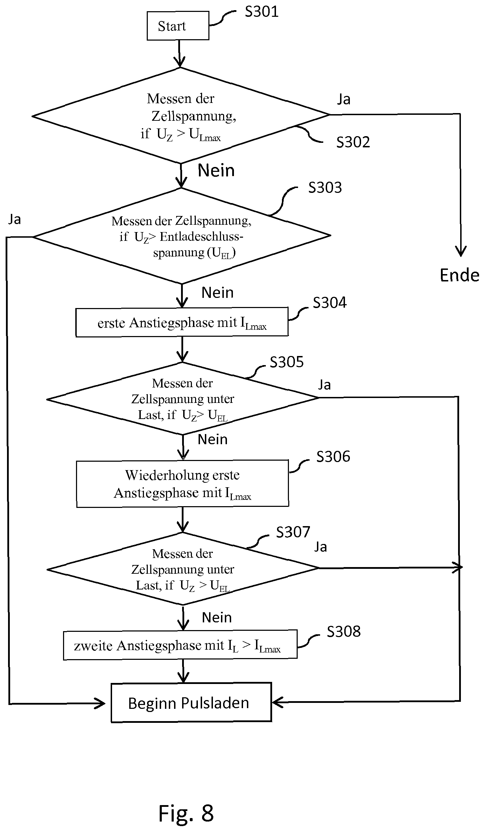

In Fig. 8 ist ein Flussablaufdiagramm für ein erfindungsgemäßes Ladeverfahren dargestellt, bei dem sowohl eine nicht beanspruchte Anladephase als auch eine Pulsladephase durchgeführt wird. Nachdem in Schritt S301 das Ladeverfahren begonnen wird, wird anfänglich die Spannung U_{Z} an der Zelle gemessen (S302). Wenn die Spannung U_{Z} größer als die Ladeschlussspannung U_{Lmax} ist, d.h. im Fall einer Hochenergiezelle größer als 4,2V an der Zelle anliegen, ist die Zelle vollständig geladen, so dass das Ladeverfahren beendet wird. Ist die Zellspannung U_{Z} kleiner als die Ladeschlussspannung U_{Lmax} wird im Schritt S303 überprüft, ob die Zellspannung größer als eine Entladeschlussspannung U_{EL} ist. Die Entladeschlussspannung U_{EL} einer Hochenergiezelle liegt bei 2,5V, bei einer Hochstromzelle bei 2V. Liegt die Zellspannung U_{Z} über der Entladeschlussspannung U_{EL}, kann sofort mit dem Pulsladeverfahren gemäß Fig. 7 fortgefahren werden. Hat die Zelle jedoch eine Spannung U_{Z}, die geringer als die Entladeschlussspannung U_{EL} ist, muss eine Anladephase zur Aktivierung der Zelle durchgeführt werden.

Somit erfolgt in Schritt S304 eine erste Anstiegsphase (33 in Figur 3). Beispielsweise wird die Zelle hier über eine Minute mit einem linear ansteigenden Ladestrom bis maximal zu ihrem zugelassenem Ladestrom I_{Lmax} oder einem vorbestimmten Wert geladen. Nachdem die Zelle während der ersten Anstiegsphase 33 geladen wurde, wird die Zellspannung U_{Z} unter Last gemessen. Das heißt, es wird überprüft, wie hoch die Spannung U_{Z} der Zelle im Lastfall ist. Ist die Spannung U_{Z} nun größer als die Entladeschlussspannung U_{EL} von 2,5V bzw. 2V, je nach verwendeter Zelle, kann mit der Pulsladephase begonnen werden. Andernfalls wird in den Schritten S306 bzw. S307 eine erste Anstiegsphase wiederholt. Sollte nach einer Wiederholung der ersten Anstiegsphase die Zellspannung weiter unter der Entladeschlussspannung U_{EL} liegen, wird eine zweite Anstiegsphase angewendet, bei der mit einem Ladestrom I_{L} von mehr als dem zugelassenen Ladestrom I_{Lmax} gearbeitet wird (S308). Auch wenn es in Fig. 8 nicht dargestellt ist, wird nach Abschluss der zweiten Anstiegsphase überprüft, ob die Zellspannung U_{Z} die Entladeschlussspannung U_{EL} erreicht hat. Wenn die Zellspannung U_{Z} auch nach der zweiten Anstiegsphase die Entladeschlussspannung U_{EL} nicht erreicht hat, ist die Zelle defekt und kann nicht weiter geladen werden. Die Voraussetzung für die Pulsladephase, die in Fig. 7 dargestellt ist, ist das Erreichen der Entladeschlussspannung U_{EL}. Nachdem mit der Pulsladephase begonnen wurde, wird anfänglich ein Ladepuls für eine Zeitdauer t_{L} mit einem Ladestrom I_{L} angewendet, der größer als der zugelassene Ladestrom I_{Lmax} ist. Nach dem Ladepuls wird ein Lastpuls angelegt, der vorzugsweise nur halb so lang oder 30% so lang ist wie der Ladepuls und bei dem die Zelle mit einem Entladestrom I_{Last} von ca. 25% des zugelassenen Ladestroms I_{Lmax} belastet wird. Während des Lastpulses wird die Zellspannung U_{Z} gemessen und überprüft, ob die Zellspannung U_{Z} größer als die Ladeschlussspannung U_{Lmax} ist. Sollte die Spannung U_{Z} der Zelle bereits über der Ladeschlussspannung U_{Lmax} liegen, wird überprüft, ob die Ladeschlussspannung bereits erreicht wurde. Sollte dies der Fall sein, ist die Zelle vollständig geladen.

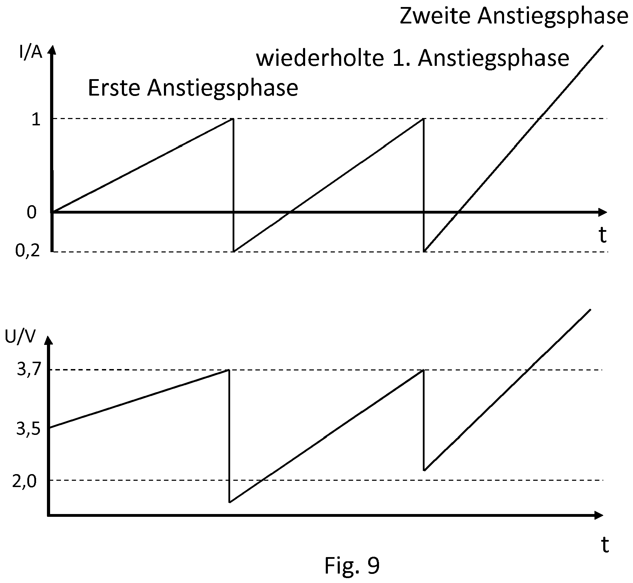

In Fig. 9 ist eine detaillierte Anladephase dargestellt. Im oberen Signalverlauf der Fig. 9 ist erkennbar, dass die Zelle anfänglich mit einem linear ansteigenden Strom bis zu einer Stromstärke von 1A geladen wird, wobei während dieser Zeit die Spannung an der Zelle von ca. 3,5V auf 3,7V ansteigt. Während der nun folgenden Lastphase wird wiederum eine Spannungsmessung vorgenommen. Nach der ersten Anstiegsphase ist erkennbar, dass die Spannung U_{Z} an der Zelle unter 2,0V liegt, was geringer als die Entladeschlussspannung U_{EL} ist, so dass eine weitere erste Anstiegsphase durchgeführt werden muss, da ein Vorliegen der Entladeschlussspannung U_{EL} Voraussetzung für den Beginn einer Pulsladephase ist. Nachdem die erste Anstiegsphase wiederholt wurde, wird erneut eine Spannungsmessung durchgeführt, die aufzeigt, dass die Zelle nach der Wiederholung der ersten Anstiegsphase eine Spannung von 2,1V (2,5V nicht dargestellt) aufweist, was über der Entladeschlussspannung U_{EL} bspw. einer Hochstromzelle(Hochenergiezelle) liegt. Nun kann je nach Ausführungsbeispiel eine zweite Anstiegsphase durchgeführt werden, bei der die Zelle bis auf eine Stromstärke oberhalb des zugelassenen Ladestroms I_{Lmax} geladen wird. Alternativ ist es möglich, direkt zum Pulsladeverfahren überzugehen.

In Fig. 10 ist eine Vorrichtung zum Durchführen eines Ladeverfahrens beschrieben. Die Vorrichtung zur Durchführung des Ladeverfahrens wird üblicherweise auch als Ladegerät bezeichnet. Anders als bei herkömmlichen Ladegeräten ist ein Ladegerät zum Durchführen des Ladeverfahrens in der Lage, eine definierte Senke bzw. einen definierten Lastpuls an die Zelle anzulegen. Das Ladegerät 100 ist mit dem Speichermodul oder Akkupack 140 verbunden. Das Speichermodul 140 umfasst hier mehrere in Reihe geschaltete Zellen 140, die mit einem Temperatursensor 160 verbunden sind, der zur kontinuierlichen bzw. periodischen Temperaturüberwachung mit dem Ladegerät 100 gekoppelt ist. Das Ladegerät 100 weist eine CPU 110 auf, die das erfindungsgemäße Ladeverfahren durchführt. Die CPU 110 ist mit einem Speicher 120 verbunden und mit einem Display 130 zur Ausgabe von gemessenen Werten. Weiter verfügt das Ladegerät über eine Eingabeeinheit 150, über die das Ladeverfahren beeinflusst werden kann, bspw. kann der Typ der zu ladenden Zelle eingegeben werden. Im Speicher 120 sind verschiedene Parameter für verschiedene Zelltypen für das Ladeverfahren abgelegt. So können beispielsweise die für eine bestimmte Zelle erforderlichen Kenndaten, wie Kapazität, Ladeschlussspannung, Nominalspannung, Entladeschlussspannung, maximaler Ladestrom, maximaler Entladestrom und Dauerentladestrom oder auch nur einige davon abgelegt sein. Basierend auf diesen Werten wird die Höhe der Ladepulse bzw. der Lastpulse berechnet und auch die Zeiten, wie t_{L}, t_{EL}, tp1, tp2. Ebenso können kritische Temperaturwerte im Speicher 120 abgelegt sein, bezogen auf den jeweiligen Zelltyp. Das Ladegerät kann vorzugsweise mit einer Erkennungsvorrichtung versehen sein, um die zu ladende Zelle zu identifizieren. Es ist ebenso möglich, dass der Typ der Zelle über die Eingabemittel 150 eingegeben wird. Die CPU 110 des Ladegeräts misst je nach Ladeverfahren in den Last- bzw. Ladepulsen die Spannung U_{Z} und/oder auch den Strom. Vorzugsweise weist das Ladegerät 100 wenigstens einen Kondensator auf, der zum Bereitstellen der Ladung für den Ladepuls verwendet wird. Ebenso ist es möglich, den wenigstens einen Kondensator zum Entladen während des Lastpulses einzusetzen, wobei die gespeicherte Ladung danach über einen Widerstand entladen wird. Weiter ist ein Zähler 121 vorhanden, der die Anzahl der Lade - bzw. Lastpulse misst, um zu verhindern, dass das Speichermodul 140 zwischen reduzierten Ladepulsen bzw. Lastpulsen hin und herschaltet, bei denen keine effiziente Ausnutzung des Pulsladeverfahrens gegeben ist.

Fig. 11 zeigt ein Speichermodul, wie es für das Pulsladeverfahren gemäß Fig.4 - 6 eingesetzt wurde. In dem Speichermodul sind 2x5 Zellen verbaut, wobei jeweils 5 parallel geschaltet sind und die zwei 5-er-Packs jeweils wieder parallel geschaltet sind. D.h. die 10 Zellen sind elektrisch parallel zueinander geschaltet, wobei jeweils maximal 5 Zellen an einer Anschlussklemme oder Stromschiene anliegen.

## Patentansprüche

1. Verfahren zum Laden wenigstens einer auf Lithium-Ionen basierten wiederaufladbaren Zelle, das Verfahren umfasst die Schritte:
- pulsförmiges Laden der Zelle (140), wobei ein Ladestrom I_{L} während der Ladepulse (31) einen zugelassenen maximalen Ladestrom I_{Lmax} der Zelle (140) um bis zum 5-fachen Wert übersteigt; und
- wobei die Zelle (140) zwischen den Ladepulsen (31) mittels Lastpulsen (32) entladen wird, wobei die Lastpulse (32) kürzer als die Ladepulse (31) sind,
wobei nach Erreichen einer Ladeschlussspannung U_{Lmax} der Zelle innerhalb eines Ladepulses die Dauer der Ladepulse reduziert wird,
**dadurch gekennzeichnet, dass**
eine maximale Anzahl m_{Max} von anwendbaren Lade- und/oder Lastpulsen vorbestimmt ist, und
das Verfahren zum Laden der Zelle beendet wird, wenn:
eine vordefinierte Anzahl (n) von Lastpulsen (32) erreicht ist, innerhalb derer eine gemessene Spannung U_{Z} der Zelle die Ladeschlussspannung U_{Lmax} der Zelle erreicht; oder
die vorbestimmte maximale Anzahl m_{Max} von anwendbaren Lade- und/oder Lastpulsen erreicht ist, je nachdem welche der beiden Bedingungen zum Beenden des Ladens der Zelle zuerst eintritt.

2. Verfahren nach Anspruch 1, weiter umfassend die folgenden Schritte:
- Überprüfen, ob eine Spannung Uz an der Zelle während eines Lastpulses anliegt, die wenigstens einer Entladeschlussspannung U_{EL} der Zelle entspricht oder ein externes Signal zugeführt wird, welches eine Durchführung des Pulsladeverfahrens anzeigt,
- wobei das Pulsladeverfahrens beginnt, wenn wenigstens eine dieser Bedingungen für das pulsförmige Laden der Zelle (140) erfüllt sind.

3. Verfahren nach einem der vorhergehenden Ansprüche, wobei vor und/oder nach einem Lastpuls eine vorbestimmte Ruhezeit tₚ₁, tₚ₂ vorgesehen ist, in der die Spannungszufuhr zur Zelle abgeschaltet ist, wobei die Ruhezeit tₚ₁, tₚ₂ von der Anzahl und/oder der Kapazität zu ladenden Zellen abhängt.

4. Verfahren nach Anspruch 3, wobei bei steigender Anzahl von zu ladenden Zellen, die an ein Anschlusselement gekoppelt sind, die vorbestimmte Ruhezeit tₚ₁, tₚ₂ steigt.

5. Verfahren nach einem der vorhergehenden Ansprüche, wobei in Abhängigkeit der Spannungsmessung während des Ladepulses die Höhe des Ladestroms I_{L} für den aktuellen Ladepuls (31) eingestellt wird, wobei wenn die Spannung U_{Z} der Zelle während des Ladepulses (31) die Ladeschlussspannung U_{Lmax} erreicht, die Dauer des Ladepulses t_{L} für den nächsten Ladepuls reduziert wird.

6. Verfahren nach Anspruch 5, wobei bei Erreichen der Ladeschlussspannung U_{Lmax} während des Ladepulses der Ladestrom I_{L} während des aktuellen Ladepulses reduziert wird.

7. Verfahren nach einem der vorhergehenden Ansprüche, wobei die Spannung U_{Z} der Zelle wenigstens außerhalb der Ladepulse gemessen wird, um festzustellen, ob die Zelle außerhalb des Ladepulses, vorzugsweise während des Lastpulses die Ladeschlussspannung U_{Lmax} der Zelle erreicht.

8. Verfahren nach einem der vorhergehenden Ansprüche, wobei die Höhe des Ladestroms I_{L} während der Ladepulse (31) und/oder die Höhe des Entladestroms I_{Last} während der Lastpulse (32) abhängig vom Zustand der Zelle (140) und/oder abhängig vom Innenwiderstand der Zelle (140) und/oder der Temperatur der Zelle eingestellt wird.

9. Verfahren nach einem der vorhergehenden Ansprüche, wobei während eines Lastpulses (32) ein Entladestrom I_{Last} von 50 %- 100% des Ladestroms I_{L} vom Ladepuls fließt.

10. Verfahren nach einem der vorhergehenden Ansprüche, wobei die Höhe des Ladestroms I_{L} in aufeinanderfolgenden Ladepulsen (31) verschieden ist und/oder die Höhe des Entladestroms I_{Last} in aufeinanderfolgenden Lastpulsen (32) verschieden ist.

11. Verfahren nach einem der vorhergehenden Ansprüche, wobei der Ladevorgang bei Überschreiten einer vorbestimmten Temperatur (Tₘₐₓ) der Zelle beendet oder unterbrochen wird.

12. Verfahren nach einem der vorhergehenden Ansprüche, bei dem die Länge t_{EL} eines Lastpulses (32) ca. 1/3 der Länge t_{L} eines Ladepulses (31) entspricht..

13. Vorrichtung zum Laden wenigstens einer auf Lithium-Ionen basierten wiederaufladbaren Zelle, umfassend:
einen Controller (110) der dazu eingerichtet ist, das Verfahren nach einem der Ansprüche 1-12 auszuführen.

14. Vorrichtung nach Anspruch 13, weiter umfassend wenigstens:
eine Senke und/oder Last, die dazu eingerichtet ist, die Zelle während der Lastpulse (32) zu entladen, wobei die Dauer und Höhe der Lastpulses (32) einstellbar ist, und/oder
wenigstens einen Kondensator, der dazu eingerichtet ist, während der Lastpulse (32) geladen und/oder während der Ladepulse (31) entladen zu werden.

15. Vorrichtung nach einem der vorhergehenden Ansprüche 13 oder 14, weiter umfassend:
einen Speicher (120) zur Speicherung von verschiedenen Parametern für das Ladeverfahren;
ein Display (130) zur Ausgabe von gemessenen Werten;
eine Eingabeeinheit (150) zur manuellen Beeinflussung des Ladeverfahrens und zur Eingabe von wenigstens einem der folgenden Werte: Ladeschlussspannung U_{Lmax}, Dauer des Ladepulses t_{L}, Dauer des Lastpulses t_{EL}, Dauer des Ruhezeit vor einem Lastpuls tₚ₁, Dauer des Ruhezeit nach einem Lastpuls tₚ₂, Wert zu Reduzierung des Ladepulses t_{d},
einen Temperatursensor (160) zur kontinuierlichen bzw. periodischen Temperaturüberwachung der Zelle,
ein Speichermodul (140), das wenigstens eine auf Lithium-Ionen basierten wiederaufladbaren Zelle enthält, und
einen Zähler (121) zur Erfassung der Anzahl von Ladepulsen und/oder Lastpulsen während des Pulsladeverfahrens.

## Claims

1. Method for charging at least one lithium-ion-based rechargeable cell, said method comprising the steps:
- pulsed charging of the cell (140), wherein a charging current I_{L} during the charge pulses (31) exceeds the value of a maximum permissible charging current I_{Lmax} of the cell (140) by up to 5 times; and
- wherein the cell (140) is discharged by means of load pulses (32) between the charge pulses (31), wherein the load pulses (32) are shorter than the charge pulses (31),
wherein after reaching a final charging voltage U_{Lmax} of the cell within a charging pulse the duration of the charging pulse is reduced,
**characterized in that**
a maximum number m_{Max} of applicable charge and/or load pulses is predefined, and the method for charging the cell is terminated, if:
a predefined number (n) of load pulses (32) is reached, within which a measured voltage U_{Z} of the cell reaches the final charging voltage U_{Lmax} of the cell;
or
the predefined maximum number m_{Max} of applicable charge pulses and/or load pulses is reached, depending on which of the two conditions for terminating the charging of the cell applies first.

2. Method according to Claim 1, Further comprising the following steps:
- checking whether a voltage U_{Z}, which corresponds to at least one final discharge voltage U_{EL} of the cell, is present on the cell during a load pulse or an external signal is supplied, which indicates the pulse charging procedure is being implemented,
- wherein the pulse charging procedure begins when at least one of these conditions for the pulsed charging of the cell (140) is fulfilled.

3. Method according to any one of the preceding claims, wherein a predefined rest period tₚ₁, tₚ₂, in which the voltage supply to the cell is switched off, is provided before and/or after a load pulse, wherein the rest period tₚ₁, tₚ₂ depends on the number and/or the capacitance of the cells to be charged.

4. Method according to Claim 3,
wherein for an increasing number of cells to be charged that are coupled to a connection element, the predefined rest period tₚ₁, tₚ₂ increases.

5. Method according to any one of the preceding claims, depending on the voltage measurement during the charging pulse, the size of the charging current I_{L} for the current charge pulse (31) is adjusted, wherein if the voltage U_{Z} of the cell reaches the final charging voltage U_{Lmax} during the charge pulse (31), the duration of the charge pulse t_{L} is reduced for the next charge pulse.

6. Method according to Claim 5,
wherein upon reaching the final charging voltage U_{Lmax} during the charge pulse, the charge current I_{L} is reduced during the current charge pulse.

7. Method according to any one of the preceding claims,
wherein the voltage U_{Z} of the cell is measured at least outside of the charge pulse, in order to determine whether the cell reaches the final charging voltage U_{Lmax} of the cell outside of the charge pulse, preferably during the load pulse.

8. Method according to any one of the preceding claims,
wherein the size of the charge current I_{L} during the charge pulse (31) and/or the size of the discharge current I_{Last} during the load pulses (32) is adjusted depending on the condition of the cell (140) and/or depending on the internal resistance of the cell (140) and/or the temperature of the cell.

9. Method according to any one of the preceding claims,
wherein during a load pulse (32) a discharge current I_{Last} flows which is equal to 50%-100% of the charge current I_{L} of the charge pulse.

10. Method according to any one of the preceding claims,
wherein the size of the charge current I_{L} in successive charge pulses (31) is different and/or the size of the discharge current I_{Last} in successive load pulses (32) is different.

11. Method according to any one of the preceding claims,
wherein the charging process is terminated or interrupted if a predefined temperature (Tₘₐₓ) of the cell is exceeded.

12. Method according to any one of the preceding claims,
in which the length t_{EL} of a load pulse (32) is approximately 1/3 of the length t_{L} of a charge pulse (31) .

13. Apparatus for charging at least one lithium-ion-based rechargeable cell, comprising:
a controller (110), which is configured to execute the method according to any one of Claims 1-12.

14. Apparatus according to Claim 13, further comprising at least:
one sink and/or load, which is configured to discharge the cell during the load pulses (32),
wherein the duration and height of the load pulses (32) is adjustable, and/or
at least one capacitor, which is configured to be charged during the load pulses (32) and/or discharged during the charge pulses (31).

15. Apparatus according to one of the preceding claims 13 or 14, further comprising:
a memory (120) for storing various parameters for the charging method;
a display (130) for outputting measured values;
an input unit (150) for manually controlling the charging method and for entering at least one of the following values: final charging voltage U_{Lmax}, charging pulse duration t_{L}, load pulse duration t_{EL}, duration of the rest period before a load pulse tₚ₁, duration of the rest period following a load pulse tₚ₂, value to reduce the charging pulse by t_{d}, a temperature sensor (160) for the continuous or periodic temperature monitoring of the cell,
a memory module (140), which contains at least one lithium-ion-based rechargeable cell, and
a counter (121) for detecting the number of charge pulses and/or load pulses during the pulse charging method.

## Revendications

1. Procédé pour charger au moins un élément rechargeable à base d'ions de lithium, le procédé comprenant les étapes suivantes :
- la charge pulsée de l'élément (140), dans lequel, pendant les impulsions de charge (31), un courant de charge I_{L} dépasse un courant de charge maximal I_{Lmax} admissible de l'élément (140) de l'ordre de jusqu'à 5 fois la valeur ; et
- dans lequel l'élément (140) est déchargé entre les impulsions de charge (31) au moyen d'impulsions de dissipation de charge (32), dans lequel les impulsions de dissipation de charge (32) sont plus courtes que les impulsions de charge (31),
dans lequel, après avoir atteint une tension de fin de charge U_{Lmax} de l'élément au cours d'une impulsion de charge, la durée des impulsions de charge est réduite,
**caractérisé en ce qu'**un nombre maximal m_{Max} d'impulsions de charge et/ou de dissipation de charge utilisables est prédéfini, et
**que** le procédé pour charger l'élément est terminé lorsque :
un nombre prédéfini (n) d'impulsions de dissipation de charge (32) est atteint, au cours desquelles une tension mesurée U_{Z} de l'élément atteint la tension de fin de charge U_{Lmax} de la cellule ;
ou que le nombre maximal prédéfini m_{Max} d'impulsions de charge et/ou de dissipation de charge utilisables est atteint en fonction de celle des deux conditions pour terminer la charge de l'élément qui survient en premier.

2. Procédé selon la revendication 1, comprenant en outre les étapes suivantes :
- vérifier si une tension U_{Z} est appliquée à l'élément pendant une impulsion de dissipation de charge, laquelle correspond au moins à une tension de fin de décharge U_{EL} de l'élément ou si un signal externe est fourni, lequel indique la mise en oeuvre du procédé de charge puisée,
- dans lequel le procédé de charge pulsée commence lorsqu'au moins une de ces conditions pour la charge pulsée de l'élément (140) est satisfaite.

3. Procédé selon l'une des revendications précédentes, dans lequel, avant et/ou après une impulsion de dissipation de charge, un temps de repos prédéfini tₚ₁, tₚ₂ est prévu où l'alimentation en tension de l'élément est coupée, dans lequel le temps de repos tₚ₁, tₚ₂ dépend du nombre et/ou de la capacité d'éléments à charger.

4. Procédé selon la revendication 3, dans lequel, en cas d'augmentation du nombre d'éléments à charger, lesquels sont couplés avec un élément de raccordement, le temps de repos tₚ₁, tₚ₂ prédéfini augmente.

5. Procédé selon l'une des revendications précédentes, dans lequel, en fonction de la mesure de tension pendant l'impulsion de charge, on règle le niveau du courant de charge I_{L} pour l'impulsion de charge (31) actuelle, dans lequel, lorsque la tension U_{Z} de l'élément atteint la tension de fin de charge U_{Lmax} pendant l'impulsion de charge (31), la durée de l'impulsion de charge t_{L} pour l'impulsion de charge suivante est réduite.

6. Procédé selon la revendication 5, dans lequel, en atteignant la tension de fin de charge U_{Lmax} pendant l'impulsion de charge, le courant de charge I_{L} est réduit pendant l'impulsion de charge actuelle.

7. Procédé selon l'une des revendications précédentes, dans lequel la tension U_{Z} de l'élément est mesurée au moins en-dehors des impulsions de charge pour constater si l'élément atteint la tension de fin de charge U_{Lmax} de l'élément en-dehors de l'impulsion de charge, de préférence pendant l'impulsion de dissipation de charge.

8. Procédé selon l'une des revendications précédentes, dans lequel le niveau du courant de charge I_{L} pendant les impulsions de charge (31) et/ou le niveau du courant de décharge I_{Last} pendant les impulsions de dissipation de charge (32) est réglé en fonction de l'état de l'élément (140) et/ou en fonction de la résistance interne de l'élément (140) et/ou de la température de l'élément.

9. Procédé selon l'une des revendications précédentes, dans lequel, pendant une impulsion de dissipation de charge (32), un courant de décharge I_{Last} de 50-100 % du courant de charge I_{L} de l'impulsion de charge circule.

10. Procédé selon l'une des revendications précédentes, dans lequel le niveau du courant de charge I_{L} dans des impulsions de charge (31) successives est différent et/ou le niveau du courant de décharge I_{Last} dans des impulsions de dissipation de charge (32) successives est différent.

11. Procédé selon l'une des revendications précédentes, dans lequel le processus de charge est terminé ou interrompu en cas de dépassement d'une température prédéterminée (Tₘₐₓ) de l'élément.

12. Procédé selon l'une des revendications précédentes, dans lequel la longueur t_{EL} d'une impulsion de dissipation de charge (32) correspond à environ 1/3 de la longueur t_{L} d'une impulsion de charge (31).

13. Dispositif pour charger au moins un élément rechargeable à base d'ions de lithium, comprenant :
un contrôleur (110) étudié pour mettre en oeuvre le procédé selon l'une des revendications 1-12.

14. Dispositif selon la revendication 13, comprenant en outre au moins :
un drain ou une résistance de charge qui est étudié(e) pour décharger l'élément pendant les impulsions de dissipation de charge (32), dans lequel la durée et le niveau des impulsions de dissipation de charge (32) sont réglables, et/ou
au moins un condensateur étudié pour être chargé pendant les impulsions de dissipation de charge (32) et/ou être déchargé pendant les impulsions de charge (31) .

15. Dispositif selon l'une des revendications 13 ou 14 précédentes, comprenant en outre :
une mémoire (120) pour le stockage de différents paramètres pour le procédé de charge ;
un afficheur (130) pour faire sortir des valeurs mesurées ;
une unité de saisie (150) pour influencer manuellement le procédé de charge et pour la saisie d'au moins l'une des valeurs suivantes : la tension de fin de charge U_{Lmax}, ma durée de l'impulsion de charge t_{L}, la durée de l'impulsion de dissipation de charge t_{EL}, la durée du temps de repos d'une impulsion de dissipation de charge tₚ₁, la durée du temps de repos après une impulsion de dissipation de charge tₚ₂, la valeur pour la réduction de l'impulsion de charge t_{d},
un capteur de température (160) pour la surveillance permanente ou périodique de la température de l'élément,
un module d'accumulation (140) qui comprend au moins un élément rechargeable à base d'ions de lithium, et
un compteur (121) pour détecter le nombre d'impulsions de charge et/ou d'impulsions de dissipation de charge pendant le procédé de charge puisée.
